# EUROPEAN PATENT APPLICATION

(11) **EP 1 912 003 A1**
(43) Date of publication of application: **16.04.2008**
(21) Application number: 06782023.3
(22) Date of filing: 31.07.2006
(51) Int. Cl.: F16K 27/00, F16K 1/22, F16K 5/06, F16L 21/06

(54) **VALVE WITH DIAMETER-REDUCED JOINT PART, JOINT FOR DIAMETER REDUCTION, AND PIPE SYSTEM USING THESE VALVE AND JOINT**

(30) Priority: 29.07.2005 JP 2005221969; 07.06.2006 JP 2006158937; 11.07.2006 JP 2006190831
(71) Applicant: KITZ CORPORATION, Chiba-shi, Chiba 261-8577 (JP)
(72) Inventor: MARUYAMA, Y., c/o KITZ CORP. NAGASAKA FACTORY, Hokuto-shi, Yamanashi 408-8515 (JP); GOMI, Chikashi, c/o KITZ CORP. NAGASAKA FACTORY, Hokuto-shi, Yamanashi 408-8515 (JP)
(74) Representative: Fischer, Britta Ruth
(86) International application number: PCT/JP2006/315145
(87) International publication number: WO 2007/013654

(57) **Abstract**

A valve is provided without processing junction sites thereof, in which pipes can infallibly be joined with ease only through the reduction in diameter of a housing to be fastened and, at the same time, the valve has appropriate flexibility relative to the joined pipes and is capable of absorb vibration etc., thereby exhibiting excellent durability. Furthermore, the valve has a diameter-reducible joint part, enables joining the pipes to the opposite sides thereof separately individually and can always maintain high sealability even when the pipes are joined thereto or detached therefrom, thus excelling in cost. The valve having a diameter-reducible joint 18 includes a diameter-reducible housing 2 having a flow path therein and accommodating a seal sleeve 3 formed of rubber, a valve mechanism 4 provided with a valve element 11 and built in the housing 2 to enable switching of the flow path and controlling of a flow rate, and a junction pipe P having a junction end joined with the seal sleeve 3 to the diameter-contracted joint in a tightly sealed fashion through diameter reduction of the housing 2.

## Description

### Technical Field:

The present invention relates to a valve used for switching a flow path and controlling a flow rate and particularly to a valve having a diameter-reducible joint part, to a joint for diameter reduction and to a plumbing system using the valve and the joint.

### Background Art:

Plumbing installed for air-conditioning equipment in an architectural facility or for water network comprises a combination of various plumbing members selected depending on installation requirements. While the installation of a valve having a prescribed function in compliance with an intended purpose of plumbing is required, as a method of connection between pipes, there are a flange junction method in which connection is attained via flanges provided on the ends of the pipes using a bolt and a nut, a screw-fitting method using a male screw and a female screw, a welding method in which the junction parts of a valve and a pipe are joined together by welding and a ferrule joint method.

These junction methods generally adopted have a spatial restriction almost invariably for the installment of plumbing. In this case, since pipes have to be laid in a given space between two surfaces, the structure of the plumbing becomes complicated and, when necessary, pipes bent using gasket members, a welding operation, a screw cutting operation or the like are laid. As a result, a pipe stress is exerted onto the junction sites of a valve, a joint, etc. In addition, since it is not permitted that the valve and junction pipe have flexibility, the workability involved is problematic (refer, for example, Figures 1 and 2 of Patent Document 1).

As joints for joining pipes together, various joints capable of coping with repeated bending, having flexibility, exhibiting good sealability relative to pipes and excellent in workability have been proposed. As in the structure of the joints shown in Patent Documents 2 and 3, for example, there has been known a joint utilizing a method of connection of pipes comprising inserting the pipes into the opposite ends of a joint main body and fastening with bolts the opposite ends of a housing formed into a C-shape in cross section.

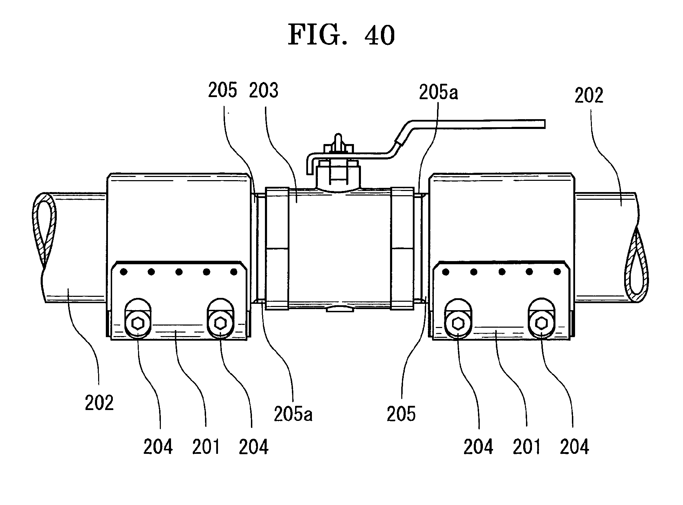

In addition, Non-Patent Document 1 discloses the state of use of a joint called a coupling joint and shows an example in which this joint is used to connect a valve to a lining steel pipe for a collective housing or a water meter conversion. Figure 40 shows a general example in which a joint 201 of this kind is used to join a pipe 202 and a valve 203 together.

An example in which the coupling joint 201 is used to join the valve 203 and the pipe 202 together will be described with reference to Figure 40. First, a male screw 205a of the junction pipe 205 is screw-fitted in a female screw not shown but formed in the inner circumference of the valve 203 to form a junction site on the side of the valve 203. Then, the joint site is fitted in one side of the joint 201 and the pipe 202 for junction is simultaneously fitted in the other side of the joint 201 to attain temporary attachment. Subsequently, tie bolts 204 of the joint 201 are fastened to join the valve 203 and the pipe 202 together by means of the joint 201. At this time, both the tie bolts 204 and 204 have to be alternately fastened relative to the joint 201 to prevent uneven clamping. In addition, when pipes 202 are joined to the opposite sides of the valve 203 as shown in the figure, the pipe 202 on the opposed side is joined to the valve 203 by means of the joint 201 in the same manner as described above.

Patent Document 1: JP-A SHO 57-10566 (U)
Patent Document 2: Japan Patent No. 1032534
Patent Document 3: Japan Patent No. 1157995
Non-Patent Document 1: "Straub Coupling Grip-Type Catalogue, SHO-BOND Coupling Co., Ltd., April 2005, p. 7

### Disclosure of the Invention:

### Problems the Invention intends to solve:

In the case of joining the valve as represented in Patent Document 1, however, since it is necessary for the valve to be fixedly attached within the given space midway the pipe along the direction of the flow path, the plumbing operation requires use of various kinds of single pipes or bent pipes, each having no flexibility, thus deteriorating the workability and inducing an instable element incapable of replying to vibration. Therefore, such a general junction method for the valve has failed to sufficiently reply to various plumbing job sites.

On the other hand, the joints disclosed in Patent Documents 2 and 3 and Non-Patent Document 1 and shown in Figure 10 are excellent in workability and flexibility. On the contrary, for attaching a valve to a pipe, a single valve independently of this kind of joint has to be attached midway the pipe. This increases the number of apparatus and materials for plumbing and deteriorates the workability. Furthermore, since it is general that a single valve is still attached using the junction method as disclosed in Patent Document 1, the attachment of the valve has been cumbersome.

In addition to the necessity to solve the above problems, this kind of valve has been expected to be in demand for the development of its functions. To be specific, desired is a valve requiring no use of single pipes or bent pipes as is done in Patent Document 1 and having a structure in which fastenings on the right and left sides (primary and secondary sides) of the valve are independent of each other, specifically in which the fastening on one of the right and left sides is not loosened when the fastening on the other side has been loosened. In addition, it has been demanded that a valve that can be joined, with the sealability maintained, in which a tight seal at the function part of the valve is not loosened when the fastened site has been loosened, is developed.

Furthermore, it has also been demanded that a valve is developed, which valve can be joined without inducing any leakage from between a pipe and a valve site having already been joined to each other when it is intended to joint the pipe anew to one side of the valve in the case where another pipe has already been joined to a connection port on the other side of the valve to form plumbing enabling a flow path to be closed (one-sided plumbing or terminal plumbing, for example). For the purpose of providing an expansion pipe, for example, development of a valve capable of being disposed on the terminal end of a pipe has been demanded. It is also desired to develop a valve having a simple structure in which a function site thereof can be fixed within the joint without preparing separate parts anew and in which a valve mechanism can always be held accommodated at a prescribed position within a housing irrespective of whether the junction to the pipe is completed or not.

Moreover, it is conceivable that the function of the valve is applied to a joint. Pipes for junction, for example, possibly fail to have exactly the same diameter even when the nominal diameters thereof are the same. This is because a slight error is possibly induced due to a difference in standard, a dimension error and a difference in material for pipes. For this reason, fastening when joining pipes is difficult to conduct, with the centers of the pipes in alignment with each other, or impossible to conduct evenly on the opposite side sites of the joint. In order to prevent these disadvantages, the right and left independent joint sites of a valve are utilized for the right and left sites of a joint to be fastened, thereby enabling the problems the prior art joints have encountered to be solved.

An object of the present invention is to provide a novel and useful valve, such as a rotary valve, capable of solving the conventional problems. It is a valve to which a pipe can easily and infallibly be joined only through the diameter reduction of a housing by fastening without processing the junction sites of the valve and which has appropriate flexibility relative to the joined pipe to absorb vibration and consequently has excellent endurance. Another object of the present invention is to provide a valve having a diameter-reducible joint part, which makes it possible to join opposed pipes thereto one by one independently of each other and to maintain its high sealability even when the pipes are joined thereto or detached therefrom and which is advantageous from the standpoint of the manufacturing cost. Still another object of the present invention is to provide a joint for diameter reduction having a diameter-reducible joint part, to which pipes of the same diameter having a dimension error, pipes of different diameters or pipes made of different materials can firmly be joined, with high sealability attained, through application of the joint part of a valve per se.

### Means for solving the Problems:

To attain the above objects, the invention set forth in claim 1 is directed to a valve having a diameter-reducible joint part, comprising a diameter-reducible housing having a flow path therein and accommodating a seal sleeve formed of rubber, a valve mechanism provided with a valve element and built in the housing to enable switching of the flow path and controlling of a flow rate, and a junction pipe having a junction end joined with the seal sleeve to the diameter-contracted joint in a tightly sealed fashion through diameter reduction of the housing.

The invention set forth in claim 2 is directed to the valve having a diameter-reducible joint part, wherein the housing is equipped on a peripheral surface thereof with a shaft hole, the valve mechanism is equipped with a shaft-mounting cylinder that is provided in the shaft hole, and the seal sleeve is equipped with a shaft-mounting ring that is inserted into the shaft-mounting cylinder.

The invention set forth in claim 3 is directed to the valve having a diameter-reducible joint part, wherein the valve element of the valve mechanism is disc-shaped for use in a butterfly valve and disposed in a rigid cylindrical frame body made of a metal to be rotatable through an operation of a stem.

The invention set forth in claim 4 is directed to the valve having a diameter-reducible joint part, wherein the valve element for the butterfly valve is coated with a seal member or has a seal member provided on at least a circular peripheral surface thereof.

The invention set forth in claim 5 is directed to the valve having a diameter-reducible joint part, further comprising a rigid retaining cylinder disposed between the stem and the shaft-mounting ring via an O-ring.

The invention set forth in claim 6 is directed to the valve having a diameter-reducible joint part, wherein the seal sleeve has formed on a central inner peripheral surface thereof with an annular valve seat part as projected therefrom, and the disc-shaped valve element is rotatably disposed on the annular valve seat.

The invention set forth in claim 7 is directed to the valve having a diameter-reducible joint part, wherein the annular valve seat part has an inserting member buried in a position of a boss part thereof.

The invention set forth in claim 8 is directed to the valve having a diameter-reducible joint part, wherein the seal sleeve is provided on an inner peripheral surface thereof with a rigid cylindrical holder of a metal, and the valve mechanism has a ball which has a through hole and which is disposed on an inner peripheral surface of the cylindrical holder via a ball seat so as to be rotatable through an operation of a stem.

The invention set forth in claim 9 is directed to the valve having a diameter-reducible joint part, wherein the stem has a lower end joined to the ball, and the rigid retaining cylinder of the metal is disposed between the stem and the shaft-mounting ring via an O-ring.

The invention set forth in claim 10 is directed to the valve having a diameter-reducible joint part, further comprising a gland screwed in a shaft-mounting cylinder, a stem has an upper end projecting from the gland, a handle fixed to the upper end of the stem, and an intermediate valve travel-fixing mechanism attached to a site of fixation.

The invention set forth in claim 11 is directed to the valve having a diameter-reducible joint part, wherein the housing is cylindrical and has a gap formed by press working, and the seal sleeve of rubber accommodated in the housing is formed with lip parts by bending opposite ends thereof inward, and further comprising a lock ring that bites in a outer peripheral junction surface of the pipe when the housing is reduced in diameter in consequence of the pipe being joined to the housing.

The invention set forth in claim 12 is directed to the valve having a diameter-reducible joint part, wherein the lip parts of the seal sleeve is pressed on the pipe owing to a diameter-reducible force of the housing, a self-bondage force of fluid pressure and a centripetal force of a spring, with the sealability and appropriate flexibility relative to outer peripheral surfaces on opposed sides of the pipes maintained.

The invention set forth in claim 13 is directed to the valve having a diameter-reducible joint part, wherein the housing is made of stainless steel and has opposite ends thereof provided with flange parts formed by press working, and each of the flange parts has accommodated and retained at an inner peripheral position thereof the lock ring, a triangular ring having a cut and a retaining ring having a cut.

The invention set forth in claim 14 is directed to the valve having a diameter-reducible joint part, wherein the housing is provided on opposite ends thereof with bolt-nut mechanisms with which the housing is reduced in diameter and fixed in a diameter-reduced state.

The invention set forth in claim 15 is directed to a valve having a diameter-reducible joint part that has diameter-enlarging and -contracting functions, comprising a housing that has one or both sides enlarged or reduced in diameter to join a pipe or pipes thereto, a valve mechanism fixed in the housing via a fixed part having a fixing function, and a dividing mechanism via which the fixing function and diameter-enlarging and -contracting functions are made independent.

The invention set forth in claim 16 is directed to the valve having a diameter-reducible joint part, wherein the dividing mechanism is a slit of a prescribed length formed along a circumferential direction of the housing in a vicinity of the fixed part of the valve mechanism.

The invention set forth in claim 17 is directed to the valve having a diameter-reducible joint part, wherein the slit is formed along the circumferential direction on one or both sides of opposite ends of the housing.

The invention set forth in claim 18 is directed to the valve having a diameter-reducible joint part, further comprising a bolt-fastening mechanism with which the opposite ends of the circumferential direction of the housing are fastened via the slit formed in the vicinity of the fixed part, wherein the fixed part fixes the valve mechanism in a fastened state.

The invention set forth in claim 19 is directed to the valve having a diameter-reducible joint part, wherein the valve mechanism comprises a valve element accommodated in an annular frame body that is provided within the housing, a valve shaft disposed on the frame body for rotating the valve element as being projected from a shaft cylinder to an outside of the housing and wherein the shaft cylinder is screwed with a gland from the outside of the housing to suspend and fix the frame body.

The invention set forth in claim 20 is directed to the valve having a diameter-reducible joint part, wherein the shaft cylinder has a female or male screw, the gland has a male or female screw, and the shaft cylinder is screwed with the gland through screw-fitting between the female screw and the male screw.

The invention set forth in claim 21 is directed to the valve having a diameter-reducible joint part, further comprising a bolt-fastening mechanism for enlarging or reducing the housing in diameter through an opening between opposite ends of the housing, a seal sleeve formed on an inner periphery of the housing and a lock mechanism provided on the inner periphery on the opposite sides of the housing.

The invention set forth in claim 22 is directed to the valve having a diameter-reducible joint part, wherein the seal sleeve has a flat inner surface.

The invention set forth in claim 23 is directed to the valve having a diameter-reducible joint part, further comprising a divided slide plate provided on an outer peripheral surface of the seal sleeve in a vicinity of the opening of the housing in an circumferential direction thereof.

The invention set forth in claim 24 is directed to the valve having a diameter-reducible joint part, further comprising an indicator disposed at the opening between the opposite ends of the housing shaped to enable visual discernment of the fixing function and the diameter-enlarging and -reducing functions.

The invention set forth in claim 25 is directed to the valve having a diameter-reducible joint part, wherein the valve shaft is provided with a handle for switching or controlling the valve mechanism.

The invention set forth in claim 26 is directed to a joint for diameter reduction, comprising a cylindrical housing having a C-shaped cross section, a seal sleeve surrounded by the housing, a bolt-fastening member for fastening opposite ends of the housing, and a lock ring for joining a pipe to the housing when the opposite ends of the housing have been fastened with the bolt-fastening member, wherein the housing is provided with a slit formed in an appropriate length from one or both of the opposite ends of the housing along a circumferential direction of the housing.

The invention set forth in claim 27 is directed to the joint for diameter reduction, wherein the slit comprises a single slit on the opposite ends of the housing in the circumferential direction thereof.

The invention set forth in claim 28 is directed to the joint for diameter reduction, wherein the cylinder is formed into a long cylindrical shape, and the slit comprises a plurality of slits on the opposite ends of the housing in the circumferential direction thereof.

The invention set forth in claim 29 is directed to the joint for diameter reduction, further comprising a thin slide plate formed on an inner peripheral surface of the housing so as to cover the pipe and divided in an inner circumferential direction of the housing into at least two.

The invention set forth in claim 30 is directed to the joint for diameter reduction, further comprising an indicator disposed between the opposite ends of the housing through which the housing is enlarged or reduced in diameter for visually discerning a diameter-enlarged or -reduced state and formed into a shape corresponding to a space between the opposite ends assumed when the housing has been reduced in diameter.

The invention set forth in claim 31 is directed to a plumbing system comprising at least the joint for diameter reduction having the slit according to claim 26 or a joint for diameter reduction having no slit with which joint pipes are joined together, to constitute a plumbing, and the valve having a diameter-reducible joint part according to claim 1 or 15 and detachably attached to the plumbing.

### Effects of the Invention:

According to the present invention, since it is possible to eliminate the operations of seal chipping, screw cutting, bolting by a flange with a gasket and welding that have heretofore been performed at the sites of pipe connection, the operation time can be reduced to a great extent to alleviate the burden imposed on workers and to exponentially enhance the plumbing operability. In addition, since it is unnecessary to individually prepare valves and joints unlike the prior art, the cost can be reduced to a great extent. Furthermore, it is possible to join the pipe ends together with excellent flexibility and sealability and provide a new type of valve capable of switching the flow path and controlling the flow rate. Thus, this valve can be applied to plumbing for a fluid in various kinds of fields.

It is made possible to infallibly join the pipes together with ease without processing the pipe junction sites through mere fastening of the pipes to be reduced in diameter, to provide a valve having appropriate flexibility relative to the joined pipes and to conjugate the functions of a joint and a valve to reduce the cost. The valve mechanism for switching the flow path and controlling the flow rate is applicable to all valves including butterfly valves, ball valves, gate valves, globe valves, check valves and strainers.

According to the invention set forth in claim 15, it is possible to provide a valve having a diameter-reducible joint part, in which pipes can infallibly joined with ease through mere fastening of the housing to be reduced in diameter, the pipes can joined to the opposite sides one by one, with appropriate flexibility maintained relative to the pipes being joined, the valve mechanism can be maintained when joining or detaching the pipes, and the sealability on the sides of the joint part and the valve mechanism can always be maintained highly. As a result, use of a single valve main body makes it possible to add alterations including installation of more pipes without extracting the fluid from the plumbing system. It is made possible to further provide a valve having a diameter-reducible joint part, in which various effects a valve provided with a diameter-reducible joint part and with an integrated housing having no dividing mechanism has can be manifested without any modification, and the various problems encountered by such a valve can be solved.

According to the invention set forth in claim 16, it is made possible to infallibly separate the functions of the fixed part and the joint part, to secure the water tightness of the fixed part without propagating the diameter-reducing action of the joint part and to enlarge or reduce the diameter of the joint part without being affected by the rigid structure of the fixed part. Furthermore, the pipes can easily be inserted and joined without any deformation of the lip part at the sealing site at which the pipes are sealed, following the fastening of the fixed part. Moreover, the valve permits firm junction while maintaining high sealability even in the cases where the pipes have an error in diameter in spite of the fact that these have the same nominal diameter, where the pipes have different nominal diameters and where the pipes are made of different materials, such as metal and plastic.

According to the invention set forth in claim 17, the opposite ends of the housing can function integrally and enhance the bending rigidity when one end is provided with a slit and the other end is made rigid. As a result, it is possible to provide a valve having a diameter-reducible joint part that is usable for a curved part (curved pipe) in a ship body or a tunnel, or at a dangerous place on which a strong load, such as a worker's weight, is exerted, such as a construction field. On the other hand, when the opposite ends of the housing are provided respectively with slits, since the diameter of the housing can largely be enlarged or reduced, it is made possible to join pipes having a large diameter difference and to join pipes different in diameter or material without use of a joint, with the function of the junction site highly manifested. Furthermore, in this case, it is made possible to deform the opposite ends of the housing to reduce the diameter of the seal sleeve into a true circle and manifest high sealability after being fastened.

According to the invention set forth in claim 18, it is made possible to provide a valve having a diameter-reducible joint part, in which the valve mechanism can firmly be fixed with ease by means of the bolt-fastening mechanism while the sealability of the valve mechanism is maintained, and the switching motion of the valve element can be attained without being affected by the action of the diameter-reducible joint part being enlarged or reduced in diameter, with high sealability maintained.

According to the invention set forth in claim 19, it is made possible to provide a valve having a diameter-reducible joint part, wherein the state of the valve mechanism being fixed within the main body can be maintained even when the fastening bolt is loosed, because the frame body is fixed to the branched part of the housing. Therefore, even the structure in which the housing is not divided is effective for a method for fixing the valve mechanism. On the other hand, when the fastening bolt has been fastened, the valve mechanism is fixed more firmly to prevent the valve element from being inclined or shifted, thereby enabling the switching operation to be performed while accommodating the valve mechanism at the prescribed position and maintaining high sealability.

According to the invention set forth in claim 20, it is made possible to provide a valve having a diameter-reducible joint part, which enables the valve mechanism to be attached to the housing with a simple attaching structure and to be disposed at a prescribed position of the housing with high accuracy and which enables the high sealability to be attained to infallibly prevent fluid leakage.

According to the invention set forth in claim 21, it is made possible to provide a valve having a diameter-reducible joint part, which enables the pipe to be easily joined to the valve main body and, after the junction, enables the extraction prevention property to be attained in a firmly joined state while maintaining high sealability The valve can also exhibit excellent flexibility and maintain the firmly joined state even in the presence of vibration resulting from an earthquake etc.

According to the invention set forth in claim 22, it is made possible to provide a valve having a diameter-reducible joint part, which enables the outside diameter shape of the frame body to be simplified. It is further possible to make small the amount of deformation at the fulcrum site at which the sleeve is to be fastened and to reduce the amount of deformation of the lip part because the fastening fulcrum site becomes far from the lip part to reduce the deformation propagation, resulting in a small amount of deformation.

According to the invention set forth in claim 23, it is made possible to provide a valve having a diameter-reducible joint part, which enables the pipes to be joined to the opposite sides of the housing with high sealability, can prevent leakage from the fastened sites and attain the excellent pipe extraction prevention effect. Furthermore, the valve can prevent deformation of the slide plate when being fastened to eliminate an adverse effect on the sealability of the valve mechanism when the pipes are joined.

According to the invention set forth in claim 24, it is made possible to provide a valve having a diameter-reducible joint part, which can prevent failure to fasten the fixed part and joint part and enables fastening in an appropriate fastening amount. In addition, even when pipes of different diameters are to be joined to the joint parts, the valve can secure the amount of fastening coping with each of the pipe diameters and join both the pipes firmly.

According to the invention set forth in claim 25, it is made possible to provide a valve having a diameter-reducible joint part, which can manually operated with ease, and the provision of a stopper enables the manual operation, with exactitude, up to a fully opened or closed state.

According to the invention set forth in claim 26, it is made possible to provide a joint for diameter reduction, in which the joint part of the valve can be used as a joint without any modification and which can join the pipes firmly thereto, with the lock ring function fulfilled and high sealability maintained, even in the case where the actual pipe diameters have an error in spite of the same nominal diameter or where the pipes having different nominal diameters or made of different materials, such as metal and resin, are to be joined.

Furthermore, when the housing has slits formed from the opposite ends thereof, since the deformation of the housing by the diameter reduction can be made large, it is possible to join pipes having a large diameter difference and to satisfy a high reducer function. Also, in this case, since the opposite ends of the housing can be deformed, the seal sleeve can be reduced uniformly in diameter to satisfy high sealability.

On the other hand, when the housing has a slit formed from one end thereof, the other end thereof can function as an integral rigid body to enhance the bending rigidity As a result, the joint for diameter reduction can be used for a curved part (curved pipe) in a ship body or a tunnel, or at a dangerous place on which a strong load, such as a worker's weight, is exerted, such as a construction field.

According to the invention set forth in claim 27, it is made possible to provide a joint for diameter reduction, in which the opposite sides of the housing can independently be fastened to enlarge or reduce the diameter thereof and which can firmly join the pipes thereto one by one with high sealability through fastening of each pipe. In addition, when the housing has beforehand formed the opposite sides thereof into different diameters, pipes of different diameters can be joined thereto. Also, in this case, the valve having a diameter-reducible joint part enables the pipes to be joined thereto with high sealability.

According to the invention set forth in claim 28, it is made possible to provide a joint for diameter reduction, in which the insertion allowance for the pipes can be made long, the pipes can firmly be joined through fastening of the outer periphery of the pipes at plural positions, with high sealability and high extraction prevention property attained, and since the wall thickness of the seal sleeve in the diameter-reducing direction is the same at the opposite ends to which the pipes are to be inserted, the homogeneous fastening force can be obtained.

According to the invention set forth in claim 29, it is made possible to provide a joint for diameter reduction, in which the pipes can be joined with high sealability to the opposite sides of the housing to infallibly prevent leakage from the sites fastened, and the effect of preventing extraction of the pipes can be attained.

According to the invention set forth in claim 30, it is made possible to provide a joint for diameter reduction, in which failure to fasten the ends can be prevented, the amount of fastening suitably coping with the diameters of the pipes can be secured even when the pipes of different diameters are to be fastened, and both the pipes can firmly be joined.

According to the invention set forth in claim 31, the joint for diameter reduction is used to join the pipes together to constitute a plumbing to which the valve having a diameter-reducible joint part is detachably joined to enable provision of a desired system.

### Brief Description of the Drawings:

[Figure 1] It is a perspective view showing a valve having a diameter-reducible joint part according to the first embodiment of the present invention.
[Figure 2] It is a cross section showing the valve having a diameter-reducible joint part according to the first embodiment of the present invention.
[Figure 3] It is a side view showing a cylindrical body in the first embodiment.
[Figure 4] It is a cross section showing a valve having a diameter-reducible joint part according to the second embodiment of the present invention.
[Figure 5] It is a plan view showing an intermediate valve travel-fixing mechanism in the second embodiment.
[Figure 6] It is a cross section showing a valve having a diameter-reducible joint part according to the third embodiment of the present invention.
[Figure 7] It is a cross section showing a valve having a diameter-reducible joint part according to the fourth embodiment of the present invention.
[Figure 8] It is a cross section showing a valve element in the fourth embodiment.
[Figure 9] It is a cross section showing a valve having a diameter-reducible joint part according to the fifth embodiment of the present invention.
[Figure 10] It is a side view showing a cylindrical holder in the fifth embodiment.
[Figure 11] It is a perspective view showing the principal part of a valve having a diameter-reducible joint part according to the sixth embodiment of the present invention.
[Figure 12] It is a partially cutaway front view of the sixth embodiment.
[Figure 13] It is an exploded perspective view of the valve shown in Figure 11.
[Figure 14] It is a cross section of the sixth embodiment.
[Figure 15] It is a perspective view showing a frame body and a gland each as an example.
[Figure 16] It is an explanatory view showing the principal part in Figure 11.
[Figure 17] It is a development elevation showing a slide plate in an unprocessed state.
[Figure 18] It is a bottom view of Figure 12.
[Figure 19] It includes explanatory views showing the principle of a seal sleeve having been enlarged and reduced in diameter, (a) being an explanatory view showing the principle of the state in which the seal sleeve has been enlarged in diameter and (b) being an explanatory view showing the principle of the state in which the seal sleeve has been reduced in diameter.
[Figure 20] It is a perspective view showing a stopper.
[Figure 21] It is a perspective view showing a housing in Figure 11.
[Figure 22] It is a perspective view showing a housing as another example.
[Figure 23] It is a partially cutaway front view showing a valve having a diameter-reducible joint part according to the seventh embodiment of the present invention.
[Figure 24] It is a perspective view showing a frame body and a gland each as another example.
[Figure 25] It is a partially cutaway front view showing a valve having a diameter-reducible joint part according to the eighth embodiment of the present invention.
[Figure 26] It is a schematic explanatory view showing an apparatus for a pressure test.
[Figure 27] It is a schematic explanatory view showing an apparatus for a depiping resistant test.
[Figure 28] It is a schematic explanatory view showing an apparatus for a bending test.
[Figure 29] It is a side view showing a joint for diameter reduction, according to the first embodiment of the present invention, pertaining to the principal part of the valve having a diameter-reducible joint part shown in Figure 11.
[Figure 30] It is a perspective view showing the joint for diameter reduction in Figure 29, with its internal mechanism omitted.
[Figure 31] It is an enlarged lateral cross section showing the joint for diameter reduction in Figure 29.
[Figure 32] It is an enlarged view showing the principal part of a housing in Figure 31 in a state before being subjected to a folding process.
[Figure 33] It is a partially cutaway side view showing the housing in Figure 31.
[Figure 34] It is a front view showing the housing in Figure 31.
[Figure 35] It is a front view showing a slide plate in Figure 31 in a state before being subjected to a folding process.
[Figure 36] It is an enlarged plan view of Figure.
[Figure 37] It is a perspective view showing the principal part of a joint for diameter reduction according to the second embodiment.
[Figure 38] It is an enlarged plan view showing the joint for diameter reduction according to the second embodiment.
[Figure 39] It is a perspective view showing the principal part of a joint for diameter reduction according to the third embodiment.
[Figure 40] It is a front view showing an ordinary example of joint between a piping and a valve.

### Explanation of Reference Numerals:

- 1: Valve main body (butterfly valve, ball valve)
- 2: Housing
- 3: Seal sleeve
- 3a: Lip part
- 4: Valve mechanism
- 5: Flange
- 6: Shaft hole part
- 7: Shaft-mounting cylinder
- 8: Spring
- 9: Shaft-mounting ring
- 10: Frame body
- 11: Valve element (disc)
- 12: Stem
- 14: O-ring
- 15: Retaining cylinder
- 16: Gland
- 18: Diameter-reducible joint part
- 19: Lock ring
- 20: Triangular ring
- 21: Retaining ring
- 23: Bolt-nut mechanism
- 29: Intermediate valve travel-fixing mechanism
- 31: Seal sleeve
- 31a: Lip part
- 32: Frame body
- 33: Retaining cylinder
- 34: Seal sleeve
- 34a: Lip part
- 35: Annular valve seat part
- 36: Valve element (disc)
- 37: Inserting member
- 41: Cylindrical holder
- 42: Ball seat
- 43: Valve element (ball)
- 43b: Through hole
- 150: Joint main body
- 151: Housing
- 152: End
- P: Pipe (plumbing)

### Best Mode for carrying out the Invention:

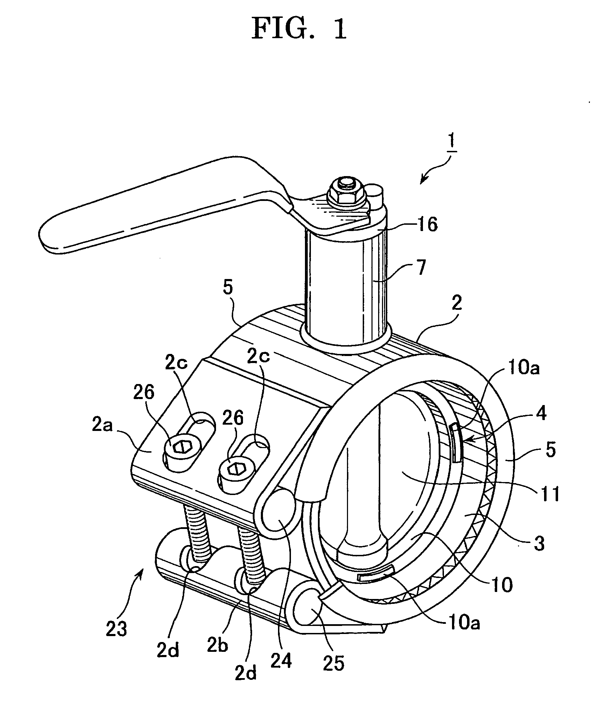

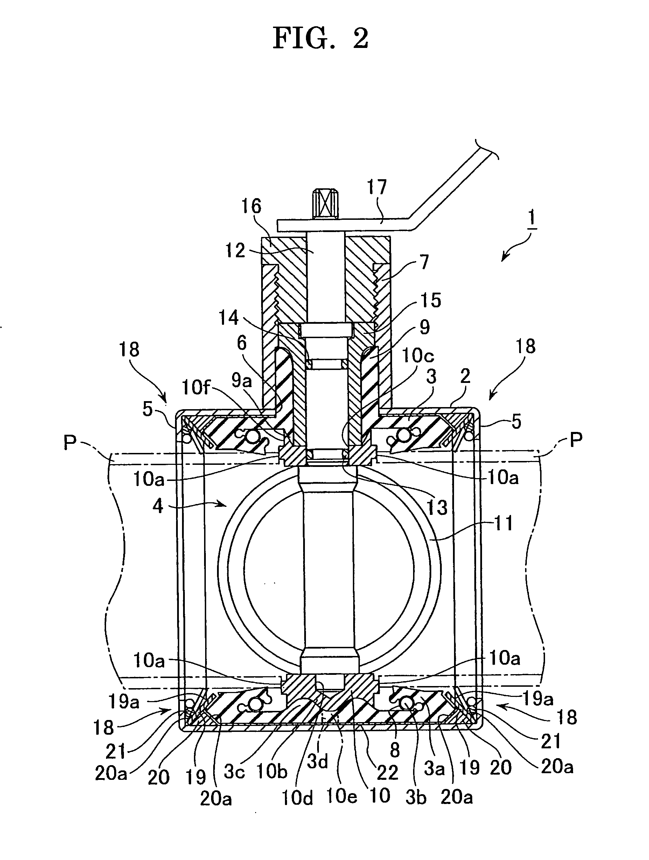

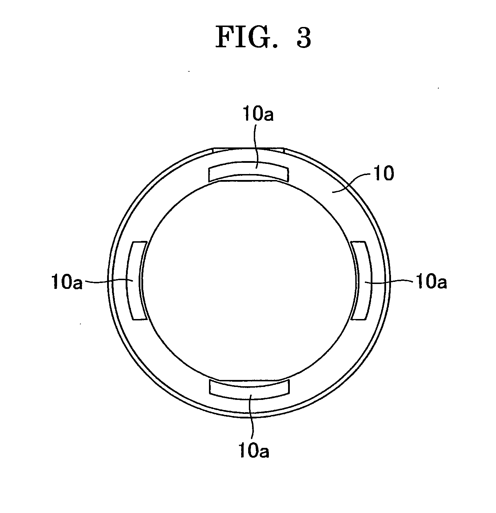

Embodiments of a valve having a diameter-reducible joint part according to the present invention will be described hereinafter in detail with reference to the drawings. The first embodiment in which the valve of the present invention is applied to a butterfly valve will first be described. Figure 1 is a perspective view showing the first embodiment, Figure 2 a cross section showing the first embodiment and Figure 3 side view showing a frame body in the first embodiment. A valve main body 1 of the present invention has accommodated in a diameter-reducible housing 2 a seal sleeve 3 made of rubber etc., has a valve mechanism 4 having a valve element (a disc of a butterfly valve) built in the housing 2 for enabling switching of a flow path in the housing 2 and controlling of a flow rate and has the junction end of a junction pipe P (hereinafter referred to as the "pipe P') joined thereto in a tightly sealed state with the seal sleeve 3 through the reduction in diameter of the housing 2.

The housing 2 is formed of a metallic material, such as stainless steel, press-formed into a cylinder having a gap and provided on the opposite sides in the axial direction with inward directed flanges 5 and 5 as shown in Figures 1 and 2. The housing 2 is provided on the outer peripheral surface thereof with a shaft hole part 6 to which a shaft-mounting cylinder 7 made of a metallic material, such as stainless steel, is fixed by welding. While the shaft-mounting cylinder 7 is fixed by welding to the hole edge site of the shaft hole part 6 formed into a flat surface in the present embodiment, the flat surface may be a surface projecting from the outer surface of the housing 2 or a surface caved in a concave form from the outer surface of the housing 2. The housing 2 is provided therein along the inner peripheral surface thereof with the seal sleeve 3 and, in the present embodiment, has the valve mechanism 6 built in for performing switching (90°-switching) of the flow path in the housing 2. It goes without saying that the valve mechanism may have a configuration enabling the adoption of an intermediate valve travel.

As the seal sleeve, is adopted a sleeve of an inner pressure seal type made of rubber. The seal sleeve 3 has its opposite ends folded inward to form lip parts 3a that have annular grooves 3b at their folded sites. An annular spring 8 is fitted in the annular groove 3b. The seal sleeve 3 is provided on the outer peripheral surface thereof with a projecting shaft-mounting cylindrical ring 9 that is fitted in the shaft-mounting cylinder 7 of the housing 2. The shaft-mounting ring 9 is provided on the lower end thereof with a downward projecting tapered part 9a that facilitates assembly relative to a frame body 10 described later and secures excellent sealability in an engaging site with the frame body 10. The seal sleeve 3 is provided on the lower inner peripheral surface thereof with a rib 3c that positions the frame body disposed on the inner peripheral surface of the seal sleeve 3 and, after the assemblage of the frame body, exhibits a position-retaining function. While the rib 3c has a wave shape in the present embodiment, this is not limitative. For example, a toothed rib having a triangular or quadrangular shape in cross section may be adopted. Incidentally, in the present embodiment, the root peripheral edge of the outer circumference of the projecting shaft-mounting ring 9 is made thick and has a flat upper surface and, therefore, the ring is accommodated in the housing 2, with its flat upper surface brought into intimate contact with the flat surface of the hole edge site of the shaft hole part 6.

The valve mechanism 4 of the present embodiment is configured such that a disc-shaped valve element 11 thereof (hereinafter referred to as the "disc 11") is provided, as being made rotatable by the operation of a stem 12, within the frame body 10 that is made of a metal and is rigid and cylindrical.

The inner peripheral surface of the frame body 10 serves as a valve seat part for the disc 11. In addition, the frame body 10 is provided on the opposite sides thereof with abutting parts 10a abutting on the junction end faces of the pipes (plumbing) *P* inserted into the housing 2 from the opposite sides of the housing. As a result, when a fluid flowing within the pipes (plumbing) P has reached the junction end faces of the frame body 10 and the pipes P, it flows between clearances between them into the annular groove 3b to exert a force to push the lip part 3a in its spread direction. Therefore, it is made possible to enhance the sealability in consequence of the fact that the inner peripheral surface of the lip part 3a is strongly abutted on the outer peripheral surfaces of the pipes *P*.

As shown in Figure 3, four such abutting parts 10a are provided as projecting in the axial direction at positions determined in view of the bore diameters of the pipes. However, the position, number and shape of the abutting parts 10a are optionally determined in compliance with the practical conditions to be adopted. For example, a continuous ring-shaped abutting part may be adopted. The frame body 10 is provided on the lower outer peripheral surface thereof with a rib 10b that positions the seal sleeve 3 and, after assemblage of the seal sleeve, exhibits a position-retaining function. While the present embodiment adopts the rib 10b in a wavy form, the shape is optionally determined in compliance with the practical conditions to be adopted. The frame body 10 is provided on the diametrical positions thereof with a stem insertion hole 10c into which the stem 12 is inserted and with a stem attachment part 10d to which the lower end of the stem is attached. An O-ring 13 is used to seal between the stem insertion hole 10c and the stem attachment part 10d. The hole-edges of the stem insertion hole 10c and stem attachment part 10d may have processing allowances. Forming the frame body 10 in a large diameter can alleviate the influence acting on the seal sleeve 3.

As shown by an alternate long and short dash line in Figure 2 as another example, the frame body 10 may be provided on the outer peripheral surface with a suitable number of projections 10e (equidistantly, for example) which are fitted on pore parts 3d formed in the seal sleeve 3. As a consequence, both the seal sleeve 3 and the frame body 10 can have a firmer position-retaining function. The projections 10c is preferred to have a length capable of partially abutting on a slide plate 22 to be described later.

The core member of the disc 11 is made of a metal material, such as stainless steel, brass, bronze or cast iron, and molded by means of casting, forging or press working. The disc 11 may be formed of a material other than the metal material and selected appropriately in compliance with the practical conditions to be adopted. The disc 11 is coated with a seal member or may be provided at least on the annular peripheral surface thereof with a seal member. In the present embodiment, the outer peripheral surface of the core member is coated with a resin material appropriately selected from polytetrafluoroethylene (PTFE), polyphenylenesulphide (PPS), PFA, nylon or other resins to fabricate a lined valve element. As another example, the valve element may have a structure in which a seal ring of rubber or resin is fitted in a groove formed in the outer peripheral surface of a disc. The disc 11 is formed therein in the diametric direction thereof with an insertion hole in which the stem 12 is fitted, thereby rotating the disc 11 in response to the rotation of the stem 12. The disc 11 may be coated with an NRB rubber lining. In this case, sealability relative to the frame body 10 made of metal can be enhanced.

A rigid retaining cylinder 15 is attached via an O-ring 14 between the stem 12 and the shaft-mounting ring 9. The lower end of the retaining cylinder 15 is abutted on the outer peripheral surface of the frame body 10, and the tapered part 9a of the shaft-mounting ring is brought into liquid tight contact with a tapered part 10f formed on the upper outer peripheral surface of the frame body 10. The retaining cylinder 15 is pressed by means of a gland 16 toward the disc 11, thereby retaining the positions of the stem 12, O-ring 14 and shaft-mounting ring 9 and infallibly preventing fluid leakage around the stem 12 by the O-ring 14 and shaft-mounting ring 9 held in an adequately pressed state. As another example, forming a rib of a hemispherical or wavy shape (not shown) on the inner peripheral surface of the shaft-mounting ring 9 enables the surface pressure onto the stem 12 to be further increased. To the upper end of the stem 12 projecting from the gland 16, is fixed a handle 17 for rotating the disc 11 to switch the flow path and control the flow rate.

In the figure, reference numeral 18 denotes a diameter-reducible joint part. Since the diameter-reducible joint part 18 is one example, the present invention is not limited thereto. As shown in Figure 2, a lock ring 19, a triangular ring 20 and a retaining ring 21 are accommodated and retained in positions of the inner peripheries of the flanges 5 and 5 of the housing 2. These rings are disposed respectively at the opposite ends of the seal sleeve 3 accommodated within the housing 2. The lock ring 19 is provided at its distal position cut like a slit with a plurality of claws 19a with which the outer peripheral surface of the pipe P for junction is dug into when the housing has reduced in diameter, thereby preventing the pipe from being broken away from the joint part and which press the seal sleeve 3 on the outer peripheral surface of the pipe P, thereby forming a tightly sealed structure relative to the pipe P.

The triangular ring 20 has an annular part cut like a slit to be diameter-reducible, an inward part assuming in cross section a triangular shape having an apex and conical surfaces 20a and 20a with which the seal sleeve 3 and the lock ring 19 are engaged, thereby functioning as supporters for them.

The retaining ring 21 is formed, similarly to the triangular ring 20, into an annular shape having a slit site and is diameter-reducible. The retaining ring 21 has a circular cross section and has the outer peripheral surface thereof disposed between, as colliding on, the flange 5 and the lock ring 19 to retain the lock ring 19. The slide plate 22 is disposed between the housing 2 and the seal sleeve 2 to cover the gap in the housing 2.

As shown in Figure 1, a bolt-nut mechanism 23 is disposed at the position of the gap in the housing 2 having the opposite end faces folded back to form folded sites 2a and 2b. The bolt-nut mechanism 23 shown in the present embodiment comprises a rod washer 24 embraced by one of the folded sites 2a and a rod nut 25 embraced by the other folded site 2b, with the opposite ends of the washer and nut fixed by welding to the housing 2. The rod washer 24 is formed therein with a through hole into which the mail screw of a bolt 26 can be inserted, and the rod nut 25 is formed therein with a female screw in which the mail screw of the bolt 26 can be screw-fitted.

Elongate holes 2c and 2d that have an appropriate length in their circumferential direction are bored in the folded sites 2a and 2b, respectively. The bolt 26 is inserted from one of the elongate holes 2c to the other elongate hole 2d in the folded sites 2a and 2b and is inserted and detached into and from the rod washer 24 and rod nut 25 via the elongate holes 2c and 2d.

The operation of the valve having the diameter-reducible joint part according to the present embodiment will be described. When pipes P (including metal pipes, such as steel pipes, and plastic pipes) are inserted into the valve main body 1 from the opposite sides thereof, the end faces of the pipes Pare abutted on the abutting parts 10a provided on the opposite sides of the frame body 10. Therefore, the pipes P to be joined to the valve main body 1 can easily be set in proper positions. When there is no abutting part 10a, a marking may be given to the outer peripheral surface of each pipe at a position to be joined to visually determine the proper position from the marked part.

After the completion of the insertion of the pipes P, the housing 2 is fastened by means of the bolt-nut mechanism 23 to reduce its diameter. By fastening the bolts 26 of the bolt-nut mechanism 23, the folded cites 2a and 2b becomes closer to closer. With the diameter reduction of the housing 2, the lock ring 19 shown by a dotted line in Figure 2 is gradually rising, and the claws 19a of the lock ring 19 are dug deeply in the outer peripheral surfaces of the pipes Pto be joined. At the same time, the space that initially existed between the inner peripheral surface of the housing 2 and the outer peripheral surface of the seal sleeve 3 disappears and the relationship between the surface pressure F₁ for fastening the pipes P and the surface pressure F₂ for fastening the slide plate 22 satisfies F₁ > F₂.

When fastening the bolt 26 using a torque wrench, the two bolts 26 are alternately fastened by a prescribed amount to prevent uneven clamping. In order to infallibly accomplish the fastening to a prescribed torque, it is better to cause an indicator not shown to intervene between the folded sites 2a and 2b to virtually inspect the state of fastening.

The pipes P that have undergone the fastening operation have no possibility of inducing depiping and water leakage to materialize the excellent, tightly sealed junction state. Furthermore, even when an extracting force is exerted on the pipes P, the pipes P are less liable to be depiped and exhibits extremely large junction strength and can thus endure prolonged use. Since the sleeve 3 is pressed on the outer peripheral surface of the pipes for junction, specifically since the lip part 3a of the seal sleeve 3 is pressed on the pipes owing to the diameter-reducible force of the housing 2, the self-bondage force of the fluid pressure and the centripetal force of the spring 8, with the sealability and flexibility (flexibility angle of ±2° on one side and 4° on both sides) relative to the outer peripheral surfaces on the opposed sides of the pipes *P* maintained, an extremely excellent sealed structure can be formed.

Upon completion of the junction of the pipes P, it is made possible to switch the flow path in the housing 2 and control the flow rate. Since the seal sleeve is of an inner pressure seal type, as described above, a sealed structure utilizing the pressure of the fluid flowing within the pipes can be formed. As a result, even when the force of the fluid is exerted in the direction of leaking the fluid from the abutting sites of the pipes Pto increase the diameter of the seal sleeve 3, the self-bondage force acts to further enhance the sealability. Installation of the valve main body 1 of the present invention relative to various kinds of pipes enables plumbing to be designed in compliance with the intended purposes and installation conditions and has no requirement of separate preparation of a joint and a valve as has been required by the prior art, thus reducing the cost. In addition, the number of places of connection is reduced to a great extent to alleviate the personnel burden and spectacularly improve the workability. By simplifying the configuration of the plumbing, maintenance, inspection and component replacement can be facilitated.

Even the pipes *P* that have satisfied the standards as pipes of the same diameter possibly have a dimension error, or such an error is possibly induced depending on the difference in material including resin and metal. Such an error can be absorbed by the function of the seal sleeve 3 when fastening the bolt 26 to enable firm junction of the pipes *P*. Furthermore, by changing beforehand the inner diameter size and the thickness of the lip part 3a of the seal sleeve 3, it is made possible to join diameter-different pipes different in nominal diameter to the opposite sides of the valve main body and exhibit the so-called pressure reducer function.

The valve main body may be provided on one side thereof only with a diameter-reducible joint part and on the other side with another connection system that can optionally adopted. In addition, the configuration of the valve according to the present invention can be applied to retainer valves or valves of a hinge system, besides the housing-shaped valve having the diameter-reducible joint parts as described above. By forming a slit in a housing for a retainer valve or a valve of a hinge system, the fixing function of the valve mechanism and the diameter-enlarging and -contracting function of the diameter-reducible joint part can separately be fulfilled to attain the same effects as in the present embodiment.

Since the valve having the diameter-reducible joint part according to the present invention can be used for the junction of various pipes including steel pipes, lining steel pipes and vinyl chloride pipes, it can be utilized for plumbing of hot-water pipes and cold-water pipes for air conditioning in buildings, plumbing of cold- and hot-water pipes for air-conditioning equipment in medicine manufactories, plumbing of cold water pipes or calcium hydroxide-blowing pipes in garbage disposal facilities, plumbing of pipes for air diffuser equipment in waste disposal and treatment facilities, plumbing of cold-water pipes for incinerators in garbage incineration plants, plumbing of pipes around filtering devices in water treatment plants, water supply temporary plumbing, water-supply bridge installation plumbing, plumbing of buried water pipes in water networks, railway snow-melting and -removal plumbing, subway fire-extinction plumbing, plumbing of connection water supply pipes for the subway fire-extinction plumbing, plumbing of circulation snow-melting pipes for railway panels, plumbing of hot-water circulation snow-melting and -removal pipes for road equipment, athletic water spray plumbing, curved pipe plumbing and various other plumbing.

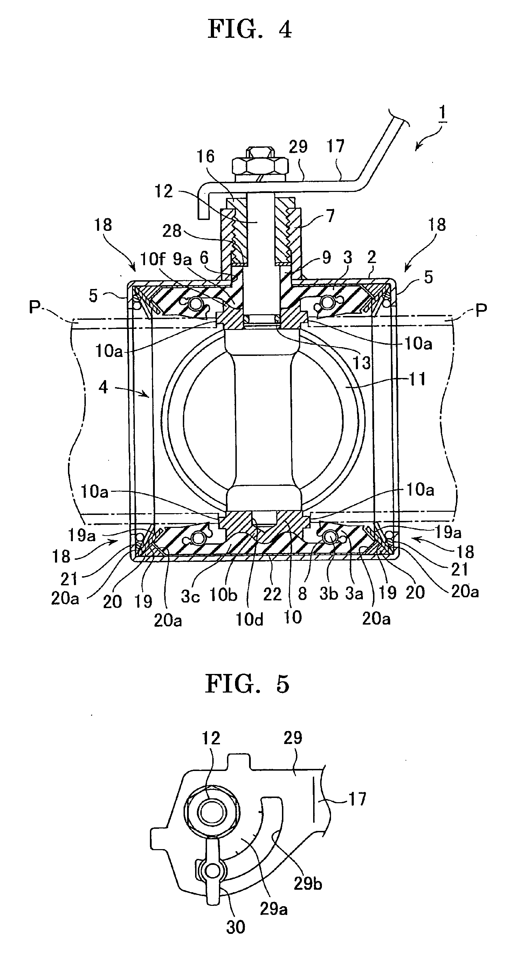

Next, the valve according to the second embodiment of the present invention will be described based on the drawings. Figure 4 is a cross section showing a valve according to the second embodiment of the present invention, and Figure 5 a plan view showing an intermediate valve travel-fixing mechanism. Incidentally, in this and subsequent embodiments, like reference numerals denote like component elements, and the description thereof will be omitted.

In the present embodiment, the shaft-mounting ring is mounted on the stem 12 to function to prevent fluid leakage around the stem 12. The shaft-mounting ring 9 is pressed via a bearing 28 by the gland 16 screwed in the upper end of the shaft-mounting cylinder 7 of the housing 2 to secure excellent sealability around the stem 12. As another example, provision of a rib (not shown) having a hemispherical, wavy or other appropriate shape on the inner peripheral surface of the shaft-mounting ring 9 enables the surface pressure on the stem to be further increased. The upper end of the stem 12 projecting from the gland 16 has the handle 17 firmly fixed thereto to perform switching of the flow path and controlling of the flow rate.

Incidentally, in the state of the housing 2 in Figure 4 having been reduced in diameter, under the conditions that the seal surface pressure between the outer peripheral surface of the pipe *P* and the seal surface of the lip part 3a is denoted by *A*, that the seal surface pressure between inner peripheral surface of the seal sleeve 3 and the outer peripheral surface of the frame body 10 is denoted by *B* and that the seal surface pressure between the outer peripheral surface of the disc 11 and the inner peripheral surface of the frame body 10 is denoted by *C*, it is required that the relations of *A≥ B, A ≥ C* and *B≈ C* be satisfied. In the valve main body 1 having these relations retained in the diameter-reduced state, it is made possible to nullify the leakage to the outside. This fact is applicable to the first embodiment.

In the present embodiment, the valve can make the valve travel intermediate. As shown in Figure 5, the proximal end of the handle 17 is firmly attached to the stem 12 and the attachment site is provided with an intermediate valve travel-fixing mechanism 29. The intermediate valve travel-fixing mechanism 29 has a scale 29a formed around the proximal end of the handle 17, an arc hole 29b and a flynut 30 for fastening and fixing the edge of the arc hole 29b and sets an intermediate valve travel through fastening the flynut 30 at the position of a graduation on the scale at which an adequate valve travel can be attained.

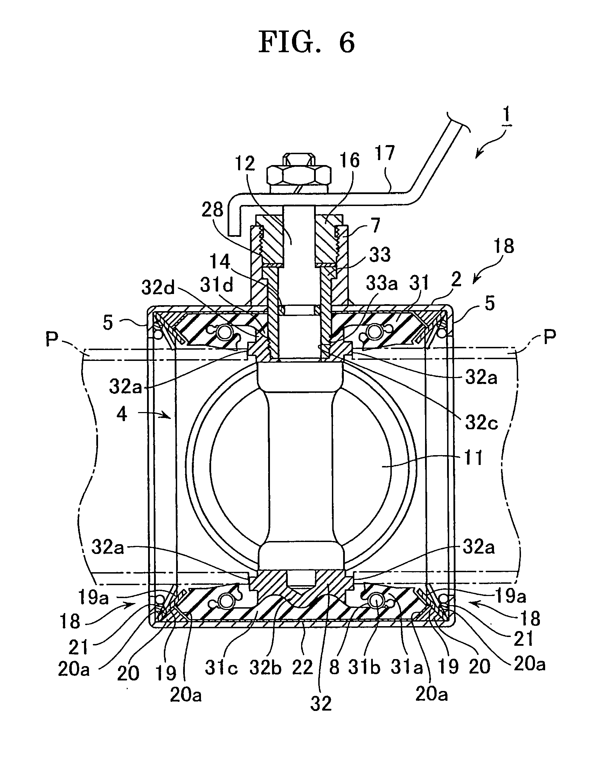

Next, the valve according to the third embodiment of the present invention will be described with reference to the drawing. Figure 6 is a cross section showing the valve according to the third embodiment of the present invention. In this embodiment, is adopted a seal sleeve 31 of an inner pressure seal type which is made of rubber and has a lip part 31a formed by folding the opposite ends thereof inward and an annular groove 31b which is formed at the folded site and in which the spring 8 is inserted. The seal sleeve 31 is formed on the lower inner peripheral surface thereof with a rib 31c for positioning a frame body 32 disposed on the inner peripheral surface of the seal sleeve 3 and, after the assemblage of the frame body, manifesting the position-retaining function. The rib 31c adopted in the present embodiment is wavy. The seal sleeve 31 is provided on the edge of the stem insertion hole thereof with a tapered part 31d that facilitates the assemblage of the frame body 32 and simultaneously retains excellent sealability of the site of engagement with the frame body 32.

The inner peripheral surface of the frame body 32 serves as a valve seat part for the disc 11. In addition, as shown in Figure 6, the frame body 32 is provided on the opposite sides thereof with abutting parts 32a abutting on the junction end faces of the pipes P inserted into the housing 2 from the opposite sides of the housing. The position, number and shape of the abutting parts 32a are optionally determined in compliance with the practical conditions to be adopted. For example, a continuous ring-shaped abutting part may be adopted. The frame body 32 is provided on the lower outer peripheral surface thereof with a rib 32b that positions the seal sleeve 31 and, after assemblage of the seal sleeve, exhibits a position-retaining function. The present embodiment adopts the rib 32b in a wavy form.

A rigid retaining cylinder 33 made of metal is attached via the O-ring 14 between the stem 12 and the shaft-mounting cylinder 7. The rigid retaining cylinder 33 is formed on the lower end with a male screw 33a that is screw-fitted in a female screw 32c formed in frame body 32. The screw fitting of the retaining cylinder 33 causes the tapered part 31d of the seal sleeve 31 to be brought into liquid-tight contact with a tapered part 32d formed on the upper outer peripheral surface of the frame 32. The gland 26 is screw-fitted in the upper portion of the retaining cylinder 33 via the bearing 28. To the upper end of the stem 12 protruding from the gland 16, the handle 17 is firmly attached to rotate the disc 11, thereby performing switching of the flow path and controlling of the flow rate.

Similarly to the second embodiment, in the state of the housing 2 having been reduced in diameter, under the conditions that the seal surface pressure between the outer peripheral surface of the pipe P and the seal surface of the lip part 31a is denoted by A, that the seal surface pressure between inner peripheral surface of the seal sleeve 31 and the outer peripheral surface of the frame body 32 is denoted by B and that the seal surface pressure between the outer peripheral surface of the disc 11 and the inner peripheral surface of the frame body 32 is denoted by C, it is required that the relations of *A≥ B, A*≥ *C* and *B≈ C* be satisfied. In the valve main body 1 having these relations retained in the diameter-reduced state, it is made possible to nullify the leakage to the outside.

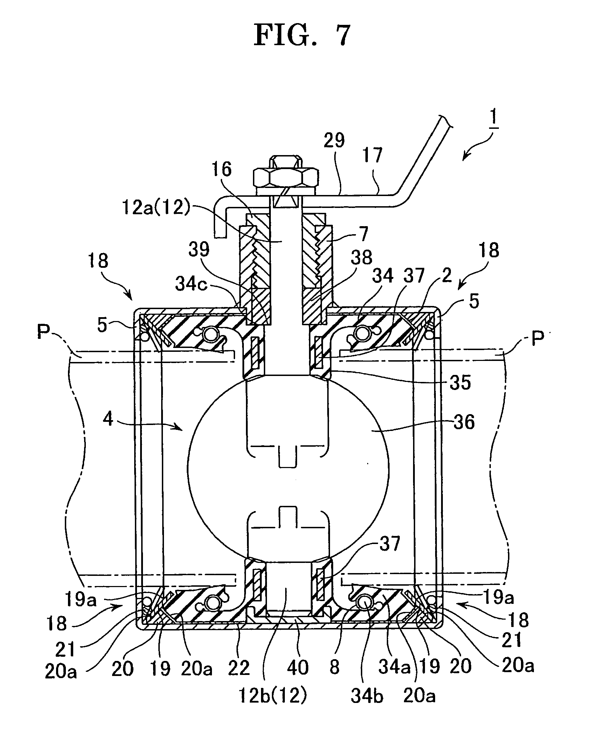

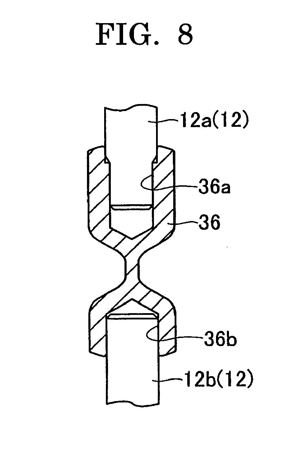

Next, the valve according to the fourth embodiment of the present invention will be described with reference to the drawings. Figure 7 is a cross section showing the valve according to the fourth embodiment of the present invention, and Figure 8 is a cross section showing the valve element adopted in the fourth embodiment. The valve mechanism 4 in the present embodiment is configured such that a substantially disc-shaped valve element 36 (hereinafter referred to as the "disc 36) disposed on an annular valve seat part 35 formed on, as projected from, the central inner peripheral surface of a seal sleeve 34 is held rotatable by the operation of the stem 12.

The seal sleeve 34 adopted in this embodiment is of an inner pressure seal type, is made of rubber and has a lip part 34a formed by folding the opposite ends thereof inward and an annular groove 34b which is formed at the folded site and in which the spring 8 is inserted. As show in Figure 7, the seal sleeve 34 is provided on the central inner peripheral surface thereof with the annular valve seat part 35 in a projecting fashion. The disc 36 is inserted into the annular valve seat part 35 thus having a valve element-sealing function. The annular valve seat part 35 has inserting members 37 and 37 of metal buried in the positions of upper and lower boss parts thereof, thereby securing sealability between the stem 12 and the seal sleeve 34 and functioning as reinforcement for the seal sleeve 34.

The disc 36 in this embodiment is made of, similarly to the above embodiment, a metal material, such as stainless steel, brass, bronze or cast iron, and molded by means of casting, forging or press working. The disc 36 may be formed of a material other than the metal material and selected appropriately in compliance with the practical conditions to be adopted. The disc 36 has bored in the opposite positions in the diametric direction thereof stem-inserting members 36a and 36b for admitting and fixing upper and lower stems 12a and 12b from the outer peripheral surface toward the centripetal direction, thereby enabling the disc 36 to be rotated with the rotation of the stem 12 inserted into the stem insertion holes 12a and 12b.

A bearing 38 is inserted between the upper stem 12 and the shaft-mounting cylinder 7. The lower end face of the bearing 38 is engaged with an annular step part 39 formed on the outer periphery of the upper stem 12a and with an annular concave part 34c formed in the upper outer peripheral surface of the seal sleeve 34, thereby preventing fluid flow from around the stem 12 with exactitude. The gland 16 screw-fitted in the upper end of the shaft-mounting cylinder 7 of the housing 2 presses the bearing 38 to secure excellent sealability around the stem 12. The upper end of the stem 12 projecting from the gland 16 has the handle 12 fixed thereto to perform switching of the flow path and controlling of the flow rate. In the present embodiment, similarly to the second embodiment, an intermediate valve travel can be attained because the valve travel-fixing mechanism 29 is attached to the upper end of the valve main body 1. Denoted by reference numeral 40 in the figure is a fixing member for fixing the lower stem 12b.

In the state of the housing 2 being reduced in diameter as shown in Figure 7, when the seal surface pressure of the seal surface between the outer peripheral surface of the pipe P and the lip part 34a is denoted by D and the seal surface pressure between the annular valve seat art 35 and the outer peripheral surface of the disc 36 is denoted by *E,* the relation of D ≥ E has to be satisfied. By retaining the relation of the surface pressures, it is made possible to nullify leakage to the outside of the valve element 1 in the diameter-contracted state.

As another example, though not shown, when inserting pipes P (including pipes of metal, such as steel, and resin pipes) from the opposite ends of the valve main body 1 at appropriate positions of the inner peripheral surface of a seal sleeve 34 having an extended surface, a pipe stopper (not shown) on which the distal ends of the pipes P are abutted, may be provided. As a result, it is made possible to easily set the pipes Pin appropriate positions at which the pipes are to be joined to the valve main body 1. Of course, a marking may be given to the outer peripheral surface of each pipe at a position to be joined to visually determine the proper position from the marked part.

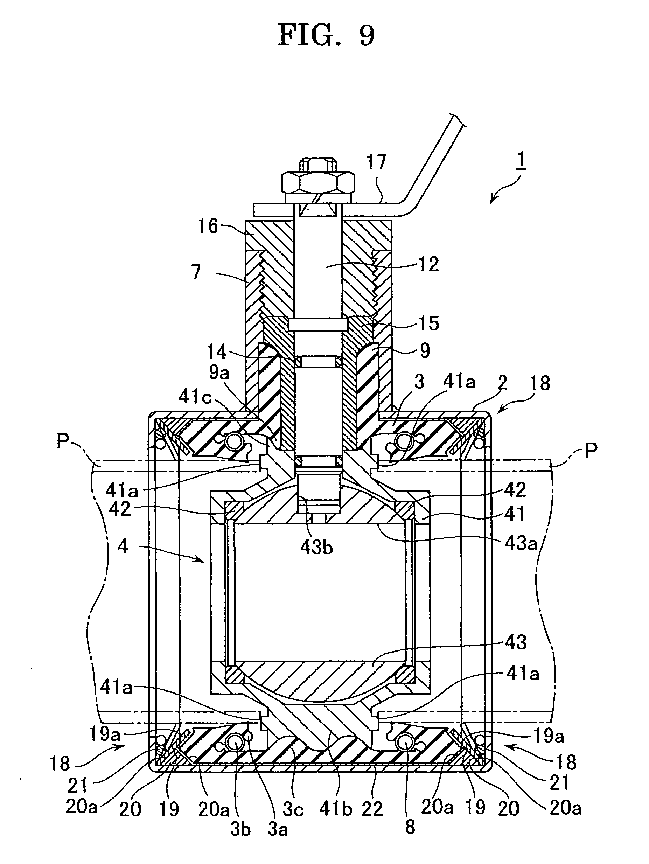

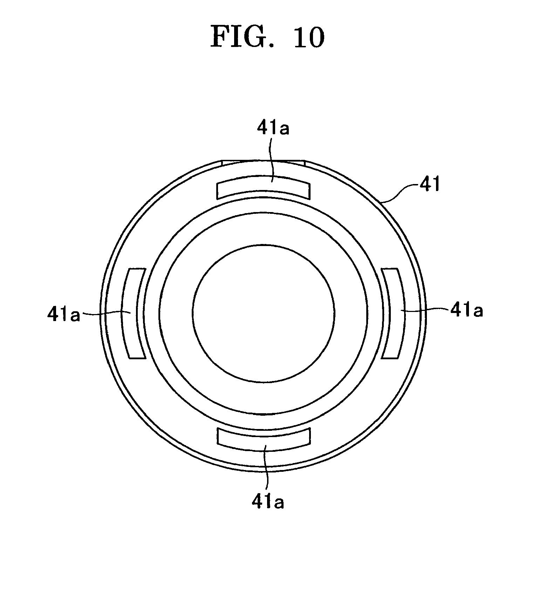

Next, the fifth embodiment in which the valve of the present invention is applied to a ball valve will be described. Figure 9 is a cross section showing the valve according to the fifth embodiment of the present invention and Figure 10 is a side view showing a cylindrical holder in the fifth embodiment. The valve main body 1 of the present invention has the seal sleeve 3 of rubber or a similar material accommodated within and the valve mechanism 4 having a valve element (a ball of a ball valve) built in the diameter-reducible housing 2, thereby enabling switching of the flow path and controlling of the flow rate and using the seal sleeve 3 in the state of the housing 2 being reduced in diameter to join the junction ends of the pipes P for junction in a sealed fashion.

The valve mechanism 4 shown in the present embodiment comprises a rigid cylindrical holder 41 of metal provided on the inner peripheral surface of the seal sleeve 3, a ball seat 42 and a spherical valve element 43 (hereinafter referred to as the ball 43) that is provided on the inner peripheral surface of the cylindrical holder 41 via the ball seat and is rotatable by means of the operation of the stem 12.

The cylindrical holder 41 molded by the press working is provided on the opposite side surfaces thereof with abutting parts 41a on which the junction end faces of the pipes P inserted into the housing 2 from the opposite sides of the housing are abutted. As shown in Figure 10, four such abutting parts 41a are provided at positions determined in consideration of the bore of the pipes P so as to project in the axial direction. However, the position, number and shape of the abutting parts 41a are optionally determined in compliance with the practical conditions to be adopted. For example, a continuous ring-shaped abutting part may be adopted. The cylindrical holder 41 is formed on the lower inner peripheral surface thereof with a rib 41b that is engaged with the rib 3c formed on the lower inner peripheral surface of the seal sleeve 3 to facilitate the assemblage thereof and, after the assemblage, manifests the position-retaining function.

The cylindrical holder 41 has accommodated therein on the inner peripheral surface thereof via the ball seat 42 the ball 43 that has a flow path 43a. In the structure of a conventional ball valve, though not shown, an insert is used to retain the ball at a proper position. In the present embodiment, however, the cylindrical holder 41 has the position-retaining function to enable the reduction in number of parts and the simplification of an assembling process. Furthermore, the cylindrical holder 41, ball seat 42 and ball 43 in an assembled state can be attached to and detached from the housing 2, thereby further facilitating the assemblage. The lower end of the stem 12 is fitted in a through hole 43b formed in the ball to enable the ball 43 to be rotated with the rotation of the stem 12.

Similarly to the first embodiment, the rigid retaining cylinder 15 of metal is attached via the O-ring 14 between the stem 12 and the shaft-mounting ring 9. The lower end of the retaining cylinder 15 is abutted on the outer peripheral surface of the cylindrical holder 41, and the tapered part 9a of the shaft-mounting ring is brought into liquid tight contact with a tapered part 41c formed on the upper outer peripheral surface of the cylindrical holder 41. As another example, though not shown, a structure wherein a male screw formed on the lower end of the retaining cylinder is engaged with a female screw formed in the cylindrical holder 41 may be adopted.

The retaining cylinder 15 is pressed toward the ball 43 by means of the gland 16 screw-fitted in the upper end of the shaft-mounting cylinder 7 of the housing 2, thereby retaining the positions of the stem 12, O-ring 14 and shaft-mounting ring 9 and infallibly preventing fluid leakage around the stem 12 by the O-ring 14 and shaft-mounting ring 9 held in an adequately pressed state. As another example, forming a rib of a hemispherical or wavy shape (not shown) on the inner peripheral surface of the shaft-mounting ring 9 enables the surface pressure onto the stem 12 to be further increased. To the upper end of the stem 12 projecting from the gland 16, is fixed the handle 17 for rotating the ball 43 to switch the flow path and control the flow rate. Incidentally, as described in the above embodiment, in the ball valve shown in Figure 9, it is necessary to satisfy the same surface pressure conditions.

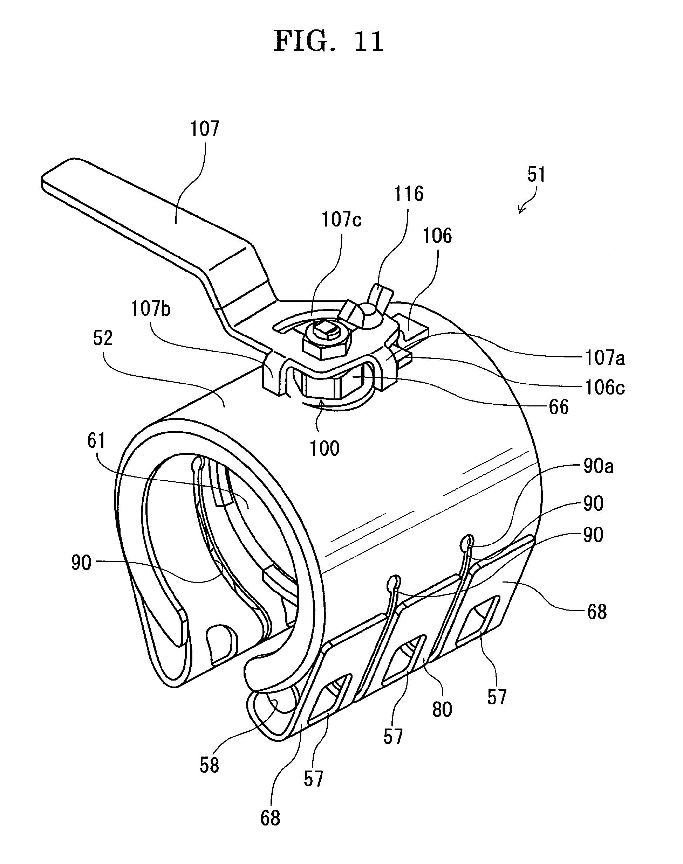

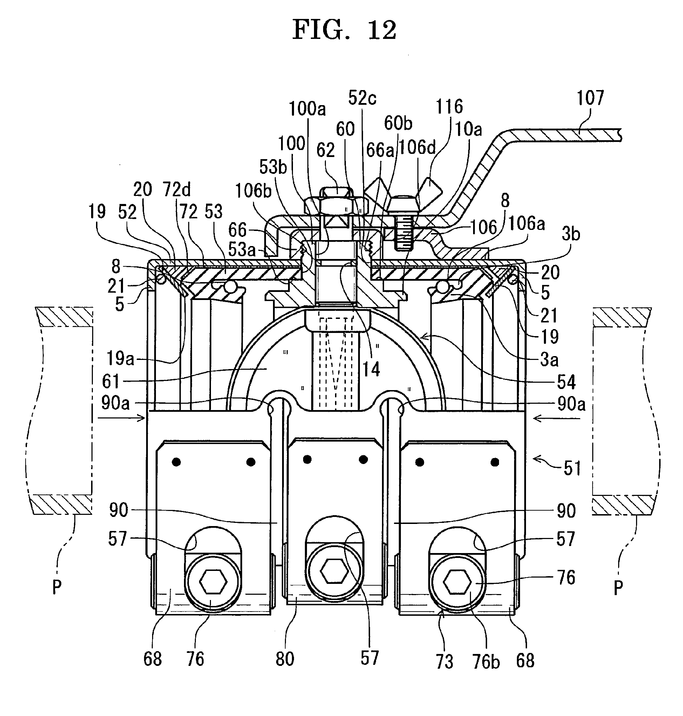

Next, the valve according to the sixth embodiment of the present invention will be described with reference to the drawings. In the valve shown in Figures 11 and 12 comprising a valve main body 51 that includes a housing 52 having one or both junction sides enlarged or contracted in diameter to form diameter-reducible joint parts to which pipes P are to be jointed, a valve mechanism 54 and a diameter-reducible joint part 68 are separately configured. Besides, the valve mechanism 54 is fixed within the housing 52 via a fixed part 80, and a fixing function of the fixed part 80 and enlarging and contracting functions of the diameter-reducible joint part 68 are made independent via a dividing mechanism.

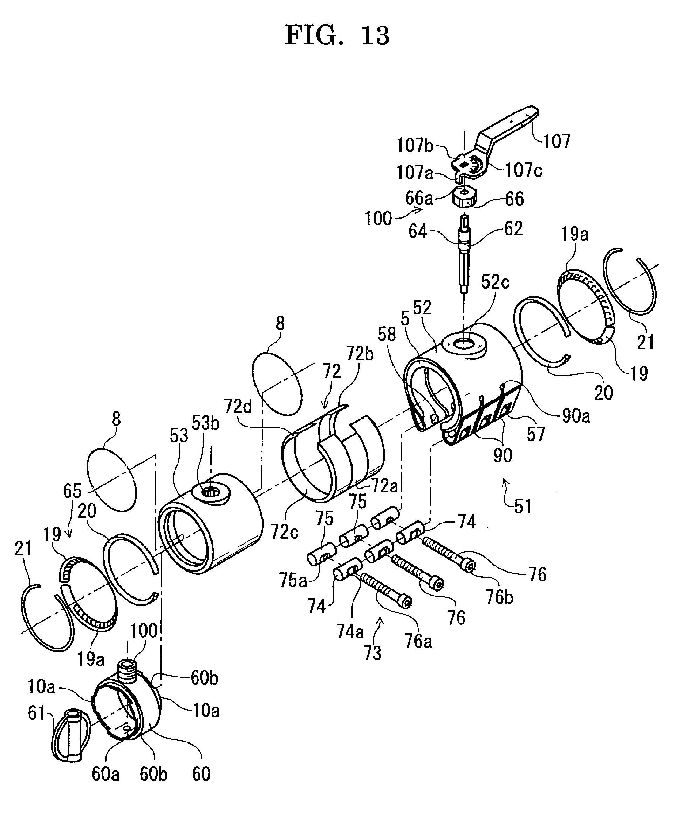

The housing 52 is formed by the press working to have a C-shape in cross section as shown in Figure 13. The housing 52 is preferred to have an extended distance between junction faces rather than the junction face distance of the same size. This extension of the distance enables a disc 60 to allow for the degree of its width and can prevent the disc 60 from being brought into contact with the ends of the pipes.

The housing 52 is formed in the opposite ends in the inner peripheral direction thereof with slits 90 and 90 extending in the circumferential direction to divide the fastening site of the housing 52 into three parts. The slit 90 is formed from the end of the housing 52 to have a prescribed length. Each of folded sites formed in consequence of the formation of the slits 90 has a length large enough to extend to the outer peripheral side of the housing. In addition, the slits 90 have such a width that the folded sites may not interfere with each other when being formed. The slit 90 is provided at the backward end thereof with a diameter-increased slit 90a for the purpose of preventing the forward end of the slit from being split by the stress produced when performing fastening by a bolt-nut mechanism 73. As described later, the slit 90 may be provided on one side end of the housing 52 in the inner peripheral direction thereof.

The slits 90 function as the dividing mechanism for making the functions of the fixed part 80 and the diameter-contracted junction part 68 individual of each other. The slit 90 is formed in the vicinity of the fixed part 80 for the valve mechanism 54 and along the circumferential direction of the housing 52. At this time, while the width of the slit 90 relative to the housing 52 can optionally be allocated, the width of the central fixed part 80 is desired to have a size not to induce the diameter reduction of the lip part 3a of a seal sleeve 53 when performing fastening by a bolt 76.

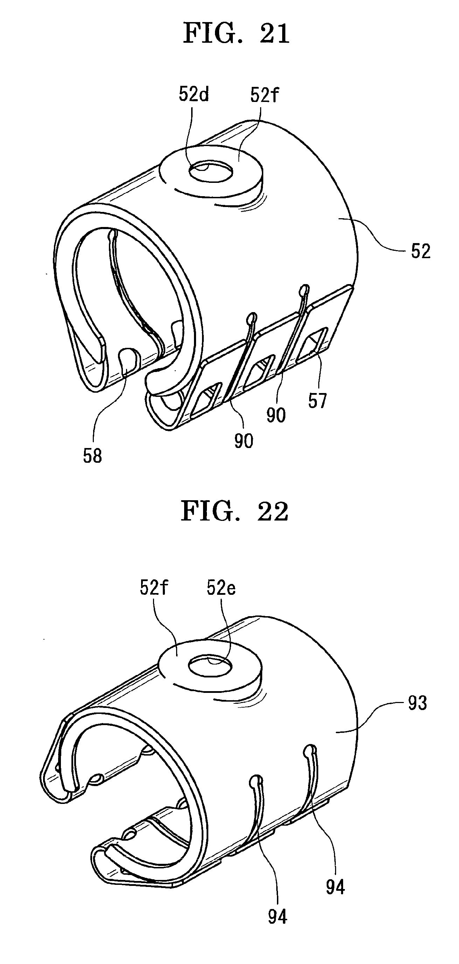

Figure 21 shows the state in which slits have been formed in the housing. In this example, the slits 90 are formed along the circumferential direction on the circumferentially opposite sides of the housing 52. In this case, a shaft cylinder 100 shown in Figure 11 is formed as disposed at a position opposed to the position of the bolt-nut mechanism 73 (at a symmetrical position) and, as a result, the valve mechanism 54 can be fastened with a homogeneous fastening force. Therefore, a fitting hole 52d for attaching the shaft cylinder 100 is formed at a position symmetrical to the position of the bolt-nut mechanism 73.

The slits may be formed on one side in the circumferential direction as shown in Figure 22. In this case, slits 94 are formed on the side where a rod nut 75 is attached. When a housing 93 has the same size as the housing 52 shown in Figure 12, the unshown length of the slit 94 is made longer than the length of the slits to be formed on the opposite sides. This enables the production of large diameter reduction when constituting a joint main body by the housing 93. The length of the slits 94 is desired to have a size twice or less than the length of the slits 90. In this case, it is desired that the shaft cylinder is disposed as deviating from the side opposed to the bolt-nut mechanism toward the side provided with no slit 94. This deviation toward the side not provided with a slit 94 enables securing the depth of the slit necessary for fastening the valve mechanism at the fixed part.

A fitting hole 52e for attaching the shaft cylinder thereto and a seat 52f for fixing the shaft cylinder are deviated in position enabling the attachment of the shaft cylinder, unlike the case shown in Figure 21, and the seat 52f is provided so as not to interfere with the folded site of the housing 93. The position is deviated by about 45° (though depending on the joint size) toward the side not provided with the slits 94. It goes without saying that the seat 52f is similarly formed on the housing 52 shown in Figure 21 for the purpose of fixing the shaft cylinder thereon.

The bolt-nut mechanism 73 comprises, as shown in Figure 13, the tie bolt 76, a rod washer 74 and the rod nut 75 and enables the fixed part 80 and the diameter-reducible joint parts 68 and 68 on the opposite sides thereof to be enlarged and contracted in diameter. The fixed part 80 is formed independently of the diameter-reducible joint parts 68 by means of the slits 90 in the vicinity of the valve mechanism 54 of the housing 52 and has the valve mechanism 54 fixed thereto by fastening the opposite sides in the circumferential direction with the bolt-nut mechanism 73 via the slits 90. On the other hand, the diameter-reducible joint part 68 has the pipe P to be joined thereto by fastening the opposite ends in the circumferential direction with the bolt-nut mechanism 73 via the slit 90. Thus, provision of the slit 90 enables the fixed part 80 and the diameter-reducible joint parts 68 on the opposite sides thereof to be made independent to make it possible to enlarge and contract their diameters individually by means of the bolt-nut mechanism 73.

When folding the divided parts back, the rod washers 74, 74 and 74 are embraced within the inside of the folded sites on the side from which the bolts 76, 76 and 76 are to be inserted, the rod nuts 75, 75 and 75 are embraced within the inside of the folded sites on the opposed side, and the end sides of the folded sites are fixed by welding means, such as spot welding, thereby fixing the rod washers 74 and rod nuts 75 to form three bolt-nut mechanisms 73 on the housing 52. The bolts 76 are inserted into and detached from the rod washers 74 and rod nuts 75 from elongate holes 57 to elongate holes 58, respectively.

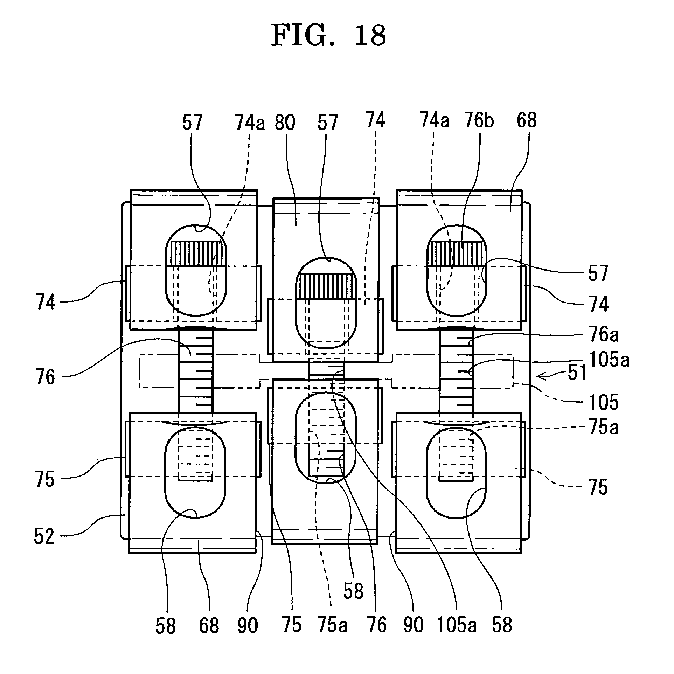

As shown in Figure 18, the rod washer 74 has a through hole 74a into which a male screw 76a of the bolt 76 can be inserted, and the rod nut 75 has a female screw 75a with which the male screw 76a can be engaged. Similarly to the first embodiment, the bolt 76 is inserted from the elongate hole 57 of the rod washer 74 into the through hole 74, thereby screwing the male screw 76a in the female screw 75a of the rod nut 75. As a result, the neighborhood of the end of the housing 52 is fastened to reduce the housing in diameter. In the present embodiment, the rod washers 74 and rod nuts 75 are individually provided relative to the divided parts and, when the divided parts are fastened with the bolts 76, the fixed part 80 and diameter-reducible joint part 68 can be reduced individually in diameter.

The rod washer 74 has an unshown flat seat for fixing a head 76b of the bolt 76 thereon and, when the head 76b has been abutted on the seat, the bolt 76 is prevented from rotating relative to the rod washer 74 and from being loosened after being fastened, thereby maintaining a firmly joined state. Though the formation of the seat may possibly make the diameter of each rod washer 74 small to weaken the rigidity of the entire rod washer, the rod washers 74 are formed into an integral structure in a straight line to heighten the rigidity of the valve of a one-side slit type. Therefore, the valve is effective at a place requiring high rigidity and enables junction while manifesting a strong bending stress. Since the rod nut 75 are provided for the divided structure, it is made possible to fasten the end sites of the housing 52 individually. Incidentally, the fastening structure utilizing the rod washers, rod nuts and tie bolts is also adopted in the first embodiment.

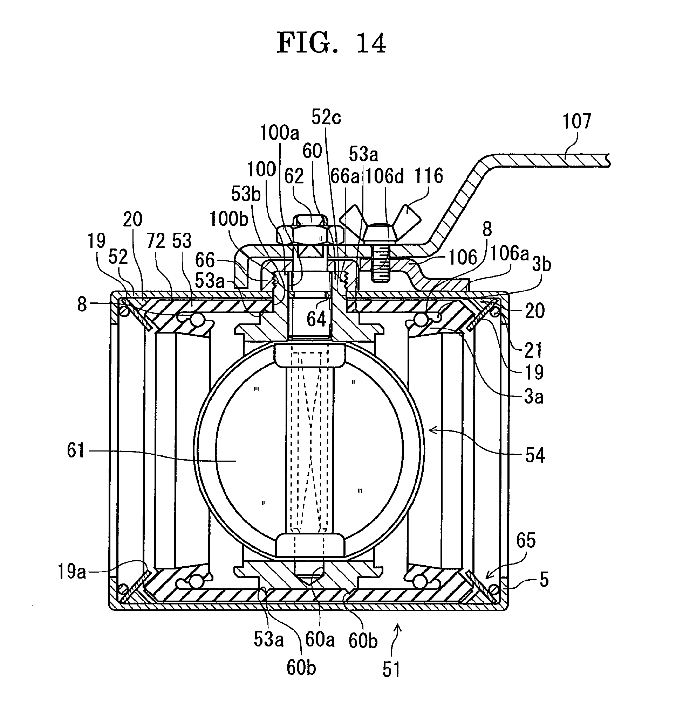

In Figure 14, the seal sleeve 53 has a flat inside and has the inner peripheral surface provided with an annular concave groove 53a for positioning the frame body 60. Thus, the valve mechanism can be positioned by other means than the rib, and different fixing means may be used insofar as it can position and fix the valve mechanism 54 within the valve main body 51.

The seal sleeve 53 is installed on the inner peripheral surface of the housing 52, with a slide plate 72 that is divided into three parts intervening between them. Though not shown in the drawings, the seal sleeve may be divided into two parts having the same shape and, in this case, part of the seal sleeve is brought into directly intimate contact with the housing 52 via the slide plate 72. In addition, the end of the seal sleeve 53 is sandwiched between the slide plate 72 and the housing 52 by dint of the end of the frame body 60. The sandwiched end of the seal sleeve 53 may have a convex shape, a concave shape or a shape like an O-ring, for example, so as to be fitted on the end of the frame body 60. Otherwise, it may have a flat shape. Incidentally, the seal sleeve 53 when divided into two parts becomes disadvantageous from the standpoint of pressure capacity.

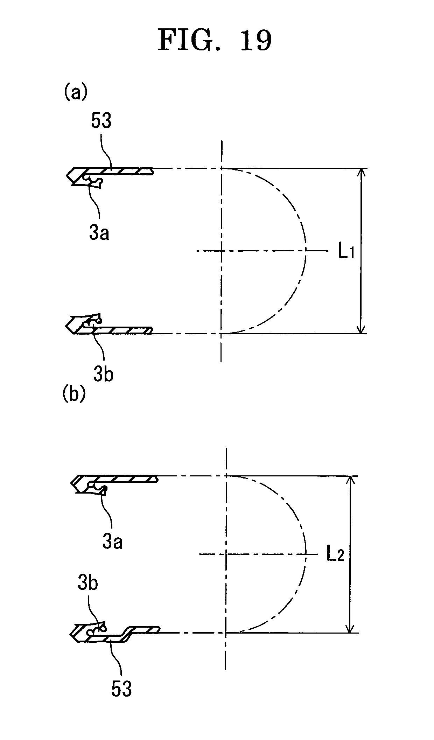

When fastening the housing 52 for fixing the valve mechanism 54, a difference of up to 5 mm in diameter of the seal sleeve 53 is produced in a valve having a size of 50A, for example (refer to Figures 19(a) and 19(b)). The seal sleeve is in a state reduced in diameter even when incorporated into the housing 52 and is forced to further reduce its diameter when fixing the valve mechanism 54 and, as a result, cannot sufficiently absorb its deformation. When the outside diameter of the seal sleeve 53 before being incorporated into the housing 52 is 83 mm, for example, the outside diameter L₁ of the seal sleeve 53 after being incorporated becomes 79 mm and the outside diameter L₂ after fixing the valve mechanism 54 (after joining the pipes *P*) becomes 74 mm.

As one of the features in sealing the joint, it can be raised that the lip part 3a embraces the outside diameter of the pipe P while reducing the seal sleeve 53 in diameter to retain the sealing performance. Though the reduction in diameter of the valve mechanism 54 alone induces partial reduction in diameter of the seal sleeve 53, the reduction in diameter and deformation of the lip part 3a can be prevented if the distance between itself and the site of the valve mechanism 54 to be reduced in diameter (the position at which the seal sleeve 53 is to be fastened). Incidentally, the deformation of the seal sleeve 53 can also be prevented when the diameter of the frame body 60 has been made larger.

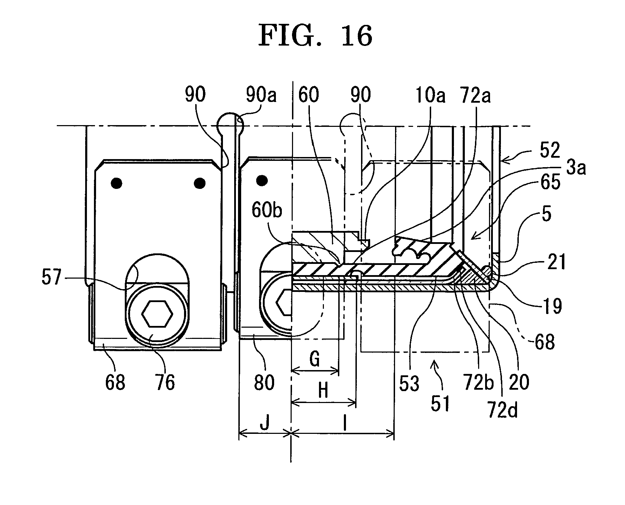

In Figure 16, denoted by *G* is a distance from the center of the valve main body 51 in the axial direction to the position at which the frame body 60 is to be fastened (the position of the frame body 60 being fastened corresponds to the projecting part of a claw rib 60b described later), by His a width of a central slide plate 72a from the center thereof (2*H*corresponds to the full width of the central slide plate 72a), by *I* is a distance from the center to the lip part 3a, and by Jis a width from the center to the site to be fastened at the center of the housing 52 (2J corresponds to the width of the site to be fastened at the housing center). In this case, in order to prevent the deformation of the lip part 3a, the value of distance *I*- distance G (the distance between the lip part 3a and the position of the seal sleeve 53 to be fastened by the frame body 60) is set so that the deformation by the reduction in diameter may be absorbed (this is actually the value of distance *I*- distance *H* due to the presence of the influence of the fastening force by the slide plate 72). Therefore, by setting the value of distance *I*- distance G to be permissibly as large as possible, the influence by the diameter reduction will be reduced and, at the same time, it will make it possible to make the cross section flat.

In addition, distance G, though varying depending on the diameter of the shaft cylinder 100 of the frame body 60, is desired to be as small as possible, with the result that the deformation of the lip part 3a can efficiently be prevented. Distance *I* may be set appropriately in view of the size of the pipe *P*. Furthermore, since the slide plate 72 is composed of the three parts stacked one on top of another, the relationship of 2*H*> 2*I* is satisfied. While it is desirable that distance G be equal to distance H, the actual relationship between the two is *G* > H, and it is desired that distance *H* may have a value corresponding to the lower limit of the range of the seal sleeve 53 being fastened by the lip part 3a.

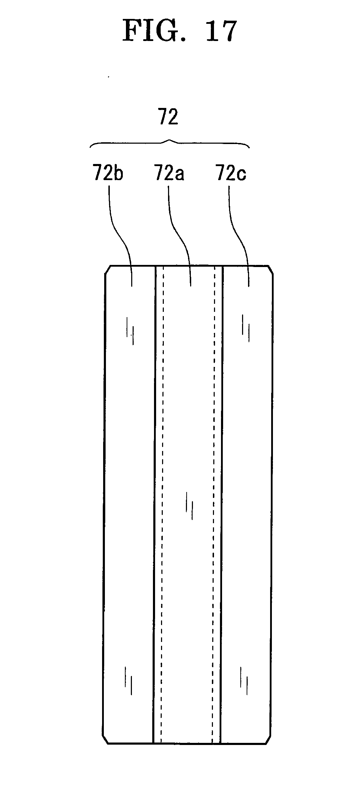

The slide plate 72 is a thin plate member bent substantially into an arc and is disposed on the outer peripheral surface of the seal sleeve 53 in the vicinity of the opposite end openings of the housing 52 in the circumferential direction and at the positions of the fixed part 80 and two diameter-reducible joint parts 68 and 68. As shown in Figure 17, three slide plates 72a, 72b and 73b have a constant width and are accommodated in a partially overlapped state in order to prevent the seal sleeve 53 from bulging out. The presence of the slide plate 72 enables the fixed part 80 and diameter-reducible joint parts 68 to be fastened separately. The central slide plate 72a is overlapped as being disposed inward of the opposite slide plates 72b and 72c. As a result, it is possible to prevent the deformation by the diameter reducction generated when the fixed part 80 has been fastened from propagating the lip part 3a.

The width of the central slide plate is desirably set, similarly to that of the central site of the housing 52 to be fastened, so that fastening with the bolt 76 may not induce the diameter reduction of the lip part 3a of the seal sleeve 53, and furthermore it is larger than the width of the central site of the housing 52 to be fastened. The edge sites of the slide plates 72b and 72c are formed to have inclined, tapered and bent parts 72d so as to overlap the conical surface 20a of the triangular ring 20. The slide plate 72 is provided as admitting the insertion of the pipes P while sliding along the inner periphery of the housing 52, thereby covering the site of the housing 52.

The slide plate 72 may be formed from a sheet of thin plate not shown and particularly formed, in cross section, into a substantial mountain shape having its apex disposed inside thereof to form a rib-like site along the circumferential direction. As a result, the rib-like site will prevent the slide plate from being twisted even when being fastened and enable the slide plate to be reduced in diameter while the fastening force is uniformly exerted thereon. The rib-like site has desirably a height as small as possible in order to maintain homogeneous diameter reduction of the seal sleeve 53.

In addition, the slide plate 72 is required to have high strength in the case where the valve main body 51 is repeatedly fastened and fixed. The slide plate is divided into three parts in the overlapped state and accommodated within the housing 52 as described above and, therefore, the overlapped parts have to be flat. In addition, since the slide plate 72 is formed from a very thin metal plate having a thickness of around 0.5 mm, the flat sites have low strength. Therefore, when the slide plate 72 fails to reduce its diameter while entangling the seal sleeve 53 completely, even by the fastening with the bolt 76, there is a possibility of part of the slide plate 72 to be fastened with the bolt 76 being deformed.

The slide plates, when being made integral, assume a so-called barreled structure that is less liable to be deformed by reduction in diameter. In order to prevent the divided slide plate from being deformed, it is required 1. that the slide plate have a thickness that induces no deformation thereof (0.5 mm or more, for example), 2. that the slide plate be bent at the opposite ends to secure strength and 3. that part of the slide plate likely to be deformed by the fastening with the bolt have a reinforcing member attached thereto.

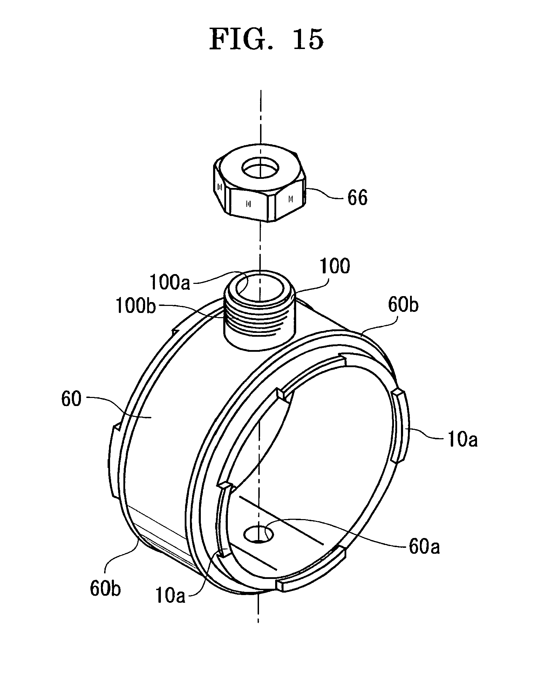

As shown in Figure 14, the valve mechanism 54 has disposed within the housing 52 the frame body 60 accommodating the disc 61 therein and has a valve shaft 62 for rotating the disc 61 disposed as projecting from the shaft cylinder 100 protruding from the outer periphery of the frame body 60. The shaft cylinder 100 is provided in the inside thereof with a stem insertion hole 100a that is sealed relative to the valve shaft 62 by means of an O-ring 64. The frame body 60 is provided at the inner peripheral position thereof opposed to the shaft cylinder 100 with a stem-mounting part 60a on which the lower end of the valve shaft 62 is mounted. The stem-mounting part may be formed either as caving midway the wall thickness of the frame body 60 as shown in Figure 14 or as piercing through the frame body 60. The stem insertion hole 100a and stem-mounting part 60a may have processing allowances around their respective holes. As shown in Figure 15, the shaft cylinder 100 is provided on the outer periphery thereof with a male screw 100b, whereas a gland 66 is formed in an outside shape of hexagon and provided in the inner periphery thereof with a female screw 66a with which the male screw 100b can be engaged.

The frame body 60 is provided on the outer peripheral surface thereof with two annular claw ribs 60b that are fitted in the annular concave grooves 53a of the seal sleeve 53, thereby attaching the frame body 60 to the inside of the seal sleeve 53. As a result, it is made possible to position the seal sleeve 53 and frame body 60 while heightening the surface pressure between them and, after the assemblage, manifest the position-retaining function.

When attaching the valve mechanism 54 to the valve main body 51, the stem 62 is inserted into the stem insertion hole 100a of the frame body 60, the disc 61 is attached to the stem 62, and the shaft cylinder 100 of the frame body 60 is attached to the housing 52 as projecting from an opening 53b of the seal sleeve 53 and from a fitting hole 52c of the housing 52. At this time, by fitting the two ribs 60b of the frame body 60 in the annular concave grooves 53a of the seal sleeve 53, it is made possible to attach the frame body 60 to a prescribed position of the seal sleeve 60 while preventing axis wobbling of the stem 62. Then, the shaft cylinder 100 is screw-fitted with the gland 66 from the outside of the housing 52 to fix the frame body 60 to the housing 52. At this time, the frame body 60 and gland 66 are joined as embracing the shaft cylinder 100 and seal sleeve 53 that are integral with the housing 52.

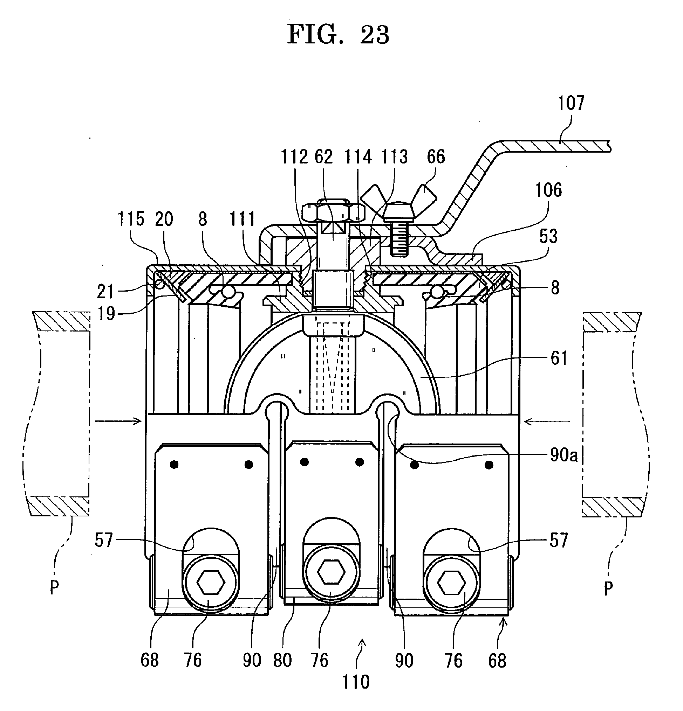

While the present embodiment has the side of the frame body 60 provided with the male screw 100b and the side to be fastened provided with the female screw 66a, it is made possible to provide the side of the frame body with a female screw and the side to be fastened with a male screw, as shown in Figure 23 to be described later. By engaging the female or male screw of the shaft cylinder 100 with the male or female screw of the gland 66, the frame body 60 can be fixed in a suspended state.

Lock mechanisms 65 each having the lock ring 19, triangular ring 20 and retaining ring 21 are accommodated in and retained on the inner periphery of the diameter-reducible joint parts 68 and fasten the diameter-reducible joint parts 68 with the tie bolts 76, thereby enabling the pipes Pto be prevented from being detached. They are disposed at the opposite ends of the seal sleeve 53 accommodated in the housing 52, respectively.

Figure 18 shows the state in which an indicator 105 is provided over the opposite openings of the housing. The indicator 105 is formed to have a width corresponding to the length between the opposite ends of the housing 52 when having been reduced in diameter. In the present embodiment, the width of the fixed part 80 to be fastened is made narrow and the width of the diameter-reducible joint parts 68 to be fastened is made wide, thereby forming a step. The indicator 105 is formed therein with communication holes 105a to which the bolt 76 for the fixed part and bolts 76 for the diameter-reducible joint parts are inserted, thereby installing the indicator between the opposite ends of the housing.

It can visually be discerned from the indicator 105 how the fixed part 80 is fastened when the folded parts have been fastened with the bolt-nut mechanism 73, thereby enabling the state of the fixing function at the time of the assemblage of the valve main body 51 to be visually discerned. By the fastening with the bolt-nut mechanism 73, the indicator 105 is sandwiched between the opposite end sites of the housing 52 and, at this time, the state of abutment between the indicator 105 and the end sites is visually discerned, thereby enabling the diameter-contracted state to be visually discerned. It can thus be prevented that the fastening by means of the bolts 76 has failed to attain.

The amount to be fastened by means of the bolts 76 can be regulated with the indicator 105 to maintain the width of the end sites after being fastened constant at all times, thereby enabling the fastening by a prescribed amount. Thus, the interposition of the indicator 105 enables infallible fastening to a prescribed torque while visually discerning the state of fastening to attach the valve mechanism 54 in the appropriately fastened state and to firmly join the pipes P while preventing the infallible detachment thereof. The provision of the indicator 105 enables prompt assembling and joining operations and securing of a prescribed fastening force. In addition, the indicator 105, when forming the step thereof to have an adequate width in advance, can cope with pipes of different diameters that will be described later. Also in this case, the sealability on the opposite sides and the pipe detachment prevention property can be secured.

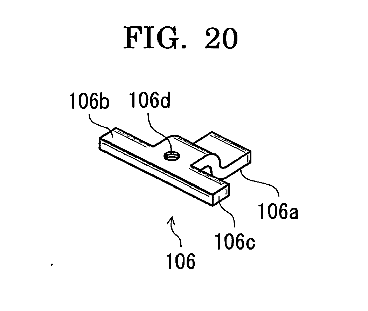

. A stopper 106 shown in Figure 20 is fixed in the vicinity of the position at which a handle 107 of the housing 52 is attached to regulate the rotation of the handle 107. The stopper 106 comprises a fixed part 106a that is fixed to the upper portion of the housing 52 at a prescribed position, by an appropriate means, such as by spot welding, and two rotation regulating parts 106b and 106c on which projecting pieces 107a and 107b formed on the handle 107 shown in Figure 11 are abutted, thereby enabling the handle 107 to be manually operated within a prescribed range. The rotation regulating part 106 is on the valve opening side and the rotation regulating part 107 is on the valve closing side. The projecting pieces 107a and 107b are abutted on the rotation regulating parts 106a and 106b, respectively, to infallibly perform the regulation at the time of opening and closing the disc 61.

In the vicinity of the center between the rotation regulating parts 106b and 106c, is formed a screw hole 106d in which a thumbscrew 116 inserted into an arc hole 107c formed in the handle 107 can be screw-fitted. The arc hole 107c assumes such a shape as enabling the handle 107 to rotate substantially by 90° and the neighborhood of the proximal end of the handle 107 is fastened from above the arc hole 107c with the thumbscrew 116. As a result, the intermediate valve travel can be retained at an optional position of the arc hole 107c. The arc hole 107c may be provided in the vicinity of the peripheral edge thereof with graduations not shown and, in this case, fastening with the thumbscrew 116 while visually discerning the graduations makes it possible to set a prescribed valve travel.

Since the enlarging and contracting functions of the diameter-reducible joint part 68 in the present embodiment are divided from the fixing function of the fixed part 80 that fixes the valve mechanism 54 via the dividing mechanism 90, the fastening with the bolt-nut mechanism 73 does not affect the fixed state of the valve mechanism 54, and the valve mechanism 54 maintains the sealability in the fixed state and can also fix the pipe P in a water-sealed state independently of the diameter-reducible joint part 68 being contracted in diameter. Furthermore, when the bolt 76 on one side has been loosened, the diameter-reducible joint part 68 on the other side is not loosened, thereby enabling the sealability to be infallibly maintained even when the pipes P have been joined to the diameter-reducible joint parts 68 separately.

Therefore, even when the pipe P is jointed to the diameter-reducible joint part 68 on one side of the valve main body 51 after joining the pipe Pto the diameter-reducible joint part 68 on the other side thereof, this can be attained while preventing leakage, thereby promoting more installation of the pipe P to exponentially enhance the function of a valve.

Since the dividing mechanism 90 comprises the slits positioned in the vicinity of the fixed part 80 of the valve mechanism 54 and formed along the circumferential direction of the housing 52 to have a prescribed length, the functions of the fixed part 80 and diameter-reducible joint parts 68 can infallibly be divided, with the slits 90 as the boundaries. Particularly when the slits 90 are formed at the sites corresponding to the neighborhood of the fixed part 80, the fastening fulcrum functioning when fastening the seal sleeve 53 will get away from the lip part 3a of the seal sleeve 53, thereby minimizing propagation to the lip part 3a of the diameter reduction deformation that would be induced when fastening with the bolt 76 for fixing the housing 52. The slits can be applied to other pipes than pipes for a valve and enable the sites to be fastened in each pipe to be fastened individually while maintaining the sealability at the sites.

In the valve mechanism 54, since only the neighborhood of the fixed part 80 divided by the slits 90 is fastened by means of the seal sleeve 53, the valve mechanism 54 once fastened in the presence of the fixed part 80 can be retained at a prescribed position. Here, since the shaft cylinder 100 of the frame body 60 is screw-fitted in a suspended state from outside the housing 52 with the gland 66, the valve mechanism 54 can be fixed using the smallest number of parts without increasing the number of unnecessary parts and, moreover, the uncomplicated fastening operation using the screw-fitted gland 66 enables the valve mechanism to be installed with ease and positioned and fixed with high accuracy.

This will be described in more detail. In Figure 12, when fastening is conducted in the state wherein the gland 66 has been screw-fitted on the shaft cylinder 100, the frame body 60 is moved upward to assume a state in which the rib 60b in the vicinity of the upper part of the frame body 60 is urged to be pressed strongly against the annular concave groove 53a of the seal sleeve. With this state maintained, by fastening the fixed part 80 with the bolt 76, the seal sleeve 53 changes its state from that shown in Figure 19(a) to that shown in Figure 19(b). The diameter of the seal sleeve 53 is changed from L₁ in Figure 19(a) to L₂ in Figure 19(b) with the reduction in diameter of the diameter-reducible joint part 68. However, since the diameter-reducible joint part 68 when being contracted is changed in shape into a true circle along the contour of the frame body 60, the seal sleeve 53 can be deformed while maintaining the state assuming appropriately circular shape as shown in Figure 19.

Therefore, in Figures 12 and 14, the frame body 60 after being fastened with the bolt 76 can be fixed to the seal sleeve 53 while the rib 60b in the vicinity of the lower part of the frame body 60 is being strongly pressed down. Thus, fastening and fixing can be attained while realizing high sealability over the entire circumference of sealing position between the seal sleeve 53 and the ribs 60b and 60b on both the primary side and the secondary side of the frame body 60.

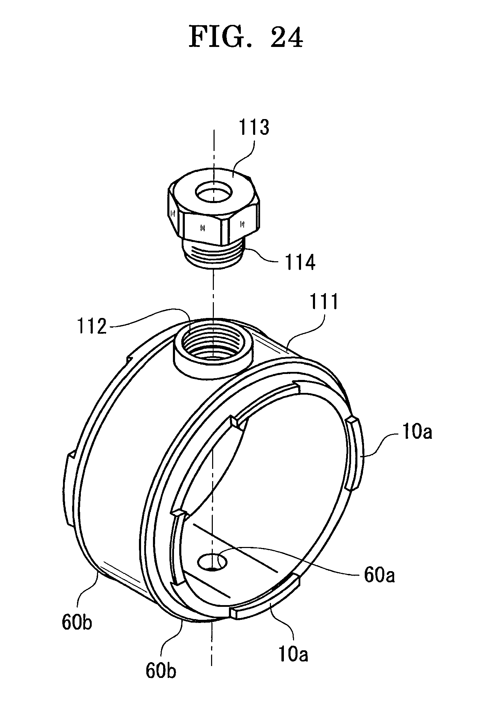

The seventh embodiment is shown in Figures 23 and 24. In a valve main body 110 of this embodiment, a housing 115 is sandwiched between a frame body 111 provided on the upper part thereof with a female screw 112 and a gland 115 provided with a male screw 114 that can be engaged with the female screw 112 to fix the frame body 111 in a suspended state. At this time, the seal sleeve 53 is simultaneously sandwiched. Thus, when fixing the frame body in the suspended state, the screw-fitting structure is not restrained. The merits involved when fixing the frame body through the suspending structure as shown in Figure 12 or 23, are to enable the number of parts to be reduced and the number of man-hours for manufacture to be reduced.

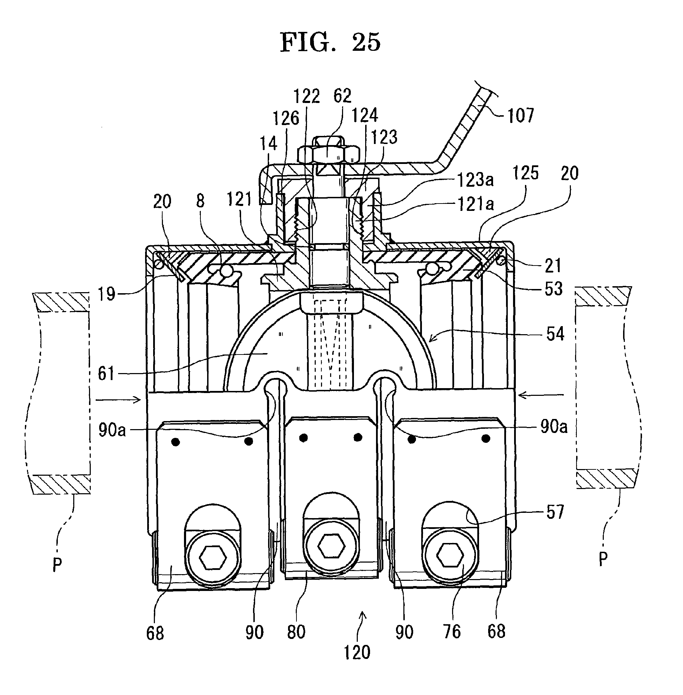

The eighth embodiment is shown in Figure 25. A valve main body 120 of this embodiment is provided with a branched cylinder 126 surrounding the site of a housing 125 through which a shaft cylinder 121a of a frame body 121 pierces. The branched cylinder 126 is made integral with the housing 125 by welding means, such as spot welding. When fixing the frame body 121, a gland 123 is mounted while a male screw 122 formed on the outer periphery of the shaft cylinder 121a is screw-fitted in a female screw 124 in a state wherein the shaft cylinder 121a projects from the inside of the branched cylinder 126. In this case, since the branched cylinder 126 is welded to the housing 125, the wall thickness of the housing 125 in the vicinity of the attachment of the shaft cylinder 121a becomes large to be reinforced. When the gland 123 has been screw-fitted, therefore, a cylindrical screw-insertion part 123a of the gland 123 intervenes between the branched cylinder 126 and the shaft cylinder 121a to establish positioning, thereby forming a substantially integral structure. Thus, the frame body 121 can firmly be fixed to the housing 125. As a result, the sealability of the seal sleeve 53 in the vicinity of the frame body 121 can be made stable to infallibly prevent fluid flow from the neighborhood of the frame body that would otherwise be induced due to a repeated rotation operation of the stem 62 and a use thereof over a long period of time.

Furthermore, though not shown, the frame body and the gland may be made integral by means of a bolt, for example, instead of the fixing means by the screw-fitting between the male and female screws. Thus, the frame body and the gland can be fixed by appropriate means without restraining the fixing means for the frame body and the housing insofar as firm fixation can be attained. Moreover, the frame body can also be fixed by appropriate fixing means without use of the gland.

Next, the initial fundamental performance of the valve of the present invention having the diameter-contracted joint, the strength of the housing and the withstand pressure strength will be measured. The valve having the slits as shown in Figure 12 was prepared as the standard for confirming the initial fundamental performance of the valve. The housing was formed such that two slit depths were formed to have a width of 4 mm on the opposite sides of the folded sites, respectively (opposite side slits), at an angle of 90° from the opening site, with the central line of the stem 62 shown in Figure 13 in the vertical direction as the standard. The housing has an entire length of 94 mm and a diameter of 78 mm and comprises the diameter-reducible joint part 68, fixed part 80 and diameter-reducible joint part 68 having the horizontal lengths of 29 mm, 24 mm and 29 mm, respectively (refer to Figure 12). The female screw that was formed on the side of the gland and the male screw that was formed on the side of the frame body (shaft cylinder) were fastened together tightly to structure the valve.

On the other hand, valve samples for confirming the length were prepared to have the following specifications (seven kinds in total). The samples having the slits are provided with two slits on the opposite sides of the folded site, respectively, similarly to the valve for confirming the initial fundamental performance, and the common specifications include the valve seat having a diameter of 53.3 mm and the housing incorporating no disc therein and having an entire length of 94 mm and a diameter of 83 mm (numerical values of the housing as a single item).

Sample No. 1 was a valve having no slit and had the seat formed at a position symmetrical with the position of the folded site. Sample No. 2 was a valve having a housing that had the same shape as the housing of the valve for confirming the initial fundamental performance, having slit depths at an angle of 90°, respectively, from the unshown central line of the opening site in the vertical direction and slit widths of 4 mm and comprising the diameter-reducible joint part, fixed part and diameter-reducible joint part having the horizontal lengths of 29 mm, 24 mm and 29 mm, respectively. Sample No. 3 was a valve having slit depths at an angle of 120°, increased by 30° as compared with Sample 2, from the central line in the vertical direction, respectively. Sample No. 4 was a valve having slit depths at angle of 135°, respectively, from the central line in the vertical direction. Sample No. 5 had no slit and had the seat positioned at an angle of 45° from the central line in the vertical direction. Sample No. 6 was a valve having a housing of the same shape as that of Sample No. 5, but having slits formed on one side (one-side slits) at an angle of 135° from the central line in the vertical direction. Sample No. 7 was a valve having one-side slits at an angle of 165° from the central line in the vertical direction.

The method of each test and object thereof will be described here. A valve seat test and a pressure test are performed for confirming the initial fundamental performance of a valve. The valve seat test was performed under a hydraulic pressure for the purpose of measuring the sealing performance of the valve seat. Since the design values of the valve mechanism were set to be those in Class 175, the valve sealing performance was confirmed using the maximum pressure used in Class 175 (175 PSI = 1.21 MPa (1 PSI = 0.069 MPa). Furthermore, the valve sealing performance was confirmed under a pressure of 1.82 MPa that was 1.5 times the maximum pressure used. That is to say, 1.21 MPa and 1.82 MPa were used as the test pressures.

The pressure test was performed under the hydraulic pressure, similarly to the valve seat test, for the purpose of measuring the resistance characteristics of the valve as a pressure container. The test pressures used in this case were 121 MPa and 1.82 MPa similarly to the valve seat test.

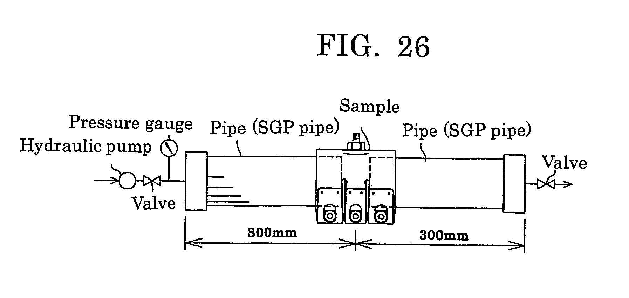

The strength test for the housing included a pressure test for confirming the sealability when a fluid pressure was applied, a depiping resistant test for examining the resistance to the force for pulling out the pipes and a bending test for confirming the sealability when the pipes were twisted. These tests were conducted for the purpose of examining the mechanical characteristics of the joints (couplings). The pressure test was conducted in the following manner using the depiping resistant test apparatus shown in Figure 26.
1. Two pipes each having one side end thereof sealed, are joined to a sample and subsequently filled therein with water.
2. The interiors of the pipes are pressurized to 0.1 MPa and retained for three minutes in this state. The sample is then tested for water leakage and abnormalities at the respective structural members.
3. After item 2, the internal pressure is raised to 1.6 MPa (normal operation pressure for a coupling having a size of 50 A), and the pipes are retained in this state for three minutes. The sample is then tested for water leakage and abnormalities at the respective structural members.
4. After item 3, the internal pressure is raised to 2.4 MPa (1.6 MPa x 1.5), and the pipes are retained in this state for three minutes. The sample is then tested for water leakage and abnormalities at the respective structural members.

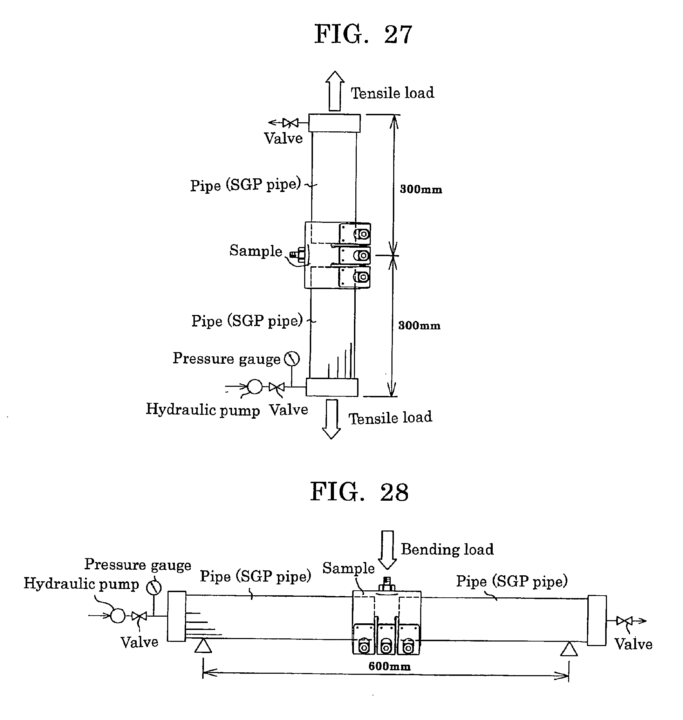

The depiping resistant test is conducted in the following manner using the depiping resistant test apparatus shown in Figure 27.
1. Two pipes each having one side end thereof sealed, are joined to a sample and subsequently installed as shown, with the interiors thereof filled with water.
2. The pipe interiors are pressurized to 1.6 MPa and a prescribed tensile load is exerted in the axial direction of the pipes. The sample is then tested for water leakage and abnormalities at the respective structural members. In addition, the dimension variation of the housing in the axial direction of the pipes is measured. The tensile load is 8800 N for the size of 50 A in accordance with the performance appraisal by the Fire Protection Equipment and Safety Center of Japan.

The bending test is conducted by the following procedure using the bending test apparatus shown in Figure 28.
1. Two pipes each having one side end thereof sealed, are joined to a sample, then installed on the bending test apparatus and set in position so that a load may be exerted onto the upper surface of the gland. The distance between the fulcra is set to be 600 mm as shown.
2. The pipe interiors are filled with water and retained under a pressure of 1.6 MPa, and a bending load is exerted until the angle of bend reaches 2°. In this state, the sample is tested for water leakage and abnormalities at the respective structural members.

The results of each test will be shown below. First, the results of the valve seat test and pressure test in the initial fundamental performance confirmation test are shown in Table 1.

**[Table 1]**

| | Test pressure of 1.21 MPa | Test pressure of 1.82MPa |
|---|---|---|
| Results of valve seat test | Not wet | Not wet |
| Results of pressure test | Not wet | Not wet |

The results of the pressure test for confirming the strength of the housing are shown in Table 2.

**[Table 2]**

| Sample No. | | Test pressure of 0.1 MPa Results after 3-min retention | Test pressure of 1.6 MPa Results after 3-min retention | Test pressure of 2.4 MPa Results after 3-min retention |
|---|---|---|---|---|
| Slits on opposite sides | Sample No. 1 (No slit) | Not wet | Not wet | Not wet |
| | Sample No. 2 (Slit depth: 90°) | Not wet | Not wet | Not wet |
| | Sample No. 3 (Slit depth: 120°) | Not wet | Not wet | |
| | Sample No. 4 (Slit depth: 135°) | Nor wet | | |
| Slits on one side | Sample No. 5 (No slit) | (On a level with Sample No. 1) | | |
| | Sample No. 6 (Slit depth: 135°) | Not wet | Not wet | Not wet |
| | Sample No. 7 (Slit depth: 165°) | Not wet | Not wet | Not wet |

The results of the depiping resistant test for confirming the strength of the housing are shown in Table 3. Incidentally, the four samples having exhibited no abnormality in the pressure test were subjected to the depiping resistant test.

**[Table 3]**

| Sample No. | | Tensile load of 8800 N | |
|---|---|---|---|
| | | Presence or absence of abnormality | Dimension variation (mm) Between opposed faces of housing |
| Slits on opposite sides | Sample No. 1 (No slit) | Not wet | Up to 0.40 |
| | Sample No. 2 (Slit depth: 90°) | Not wet | Up to 1.70 |
| | Sample No. 3 (Slit depth: 120°) | | |
| | Sample No. 4 (Slit depth: 135°) | | |
| Slit on one side | Sample No. 5 (No slit) | On a level with Sample No. 1 | |
| | Sample No. 6 (Slit depth: 135°) | Not wet | Up to 0.40 |
| | Sample No. 7 (Slit depth: 165°) | Not wet | Up to 0.40 |

The dimension variation was obtained by subtracting the dimension between the opposed faces of the housing when applying an internally sealed pressure of 1.6 MPa from the dimension between the opposed faces of the housing having the internal pressure sealed when applying a tensile load. The positions at which the dimensions were measured were three points in the vicinity of the rod nut, rod washer and stem hole and only the maximum variation in the dimension between the opposed faces at these points was shown. The largest dimension variation was confirmed at the points in the vicinity the rod nut and rod washer. The dimension variation at the point in the vicinity of the stem hole was about 0.2 mm irrespective of the shape of the housing. Incidentally, just for reference, the load exerted when Sample 1 was depiped was about 25000 N.

The results of the bending test for confirming the strength of the housing are shown in Table 4.

**[Table 4]**

| Sample No. | | Results at angle of bend of 2° |
|---|---|---|
| Slits on opposite sides | Sample No. 1 (No slit) | Not wet |
| | Sample No. 2 (Slit depth: 90°) | Not wet |
| | Sample No. 3 (Slit depth: 120°) | |
| | Sample No. 4 (Slit depth: 135°) | |
| Slit on one side | Sample No. 5 (No slit) | Not wet |
| | Sample No. 6 (Slit depth: 135°) | Not wet |
| | Sample No. 7 (Slit depth: 165°) | |

As the results of the valve seat test and pressure test, it was confirmed that the sealing performance and pressure resistant performance by means of the valve seat satisfied the design values (valve seat sealing pressure of 1.21 MPa and pressure resistant performance of 1.82 MPa shown by Class 175). When the thickness of the slide plate was set to be 0.8 mm instead of 0.5 mm, no deformation thereof by the fastening with the bolts was confirmed.

Subsequently, as regards the pressure test for confirming the strength of the housing, the results of the slit depth in each sample and the results of the pressure test based on the test results (Table 2) are shown in Table 5.

**[Table 5]**

| Sample No. | | Total slit depth | Results under withstand pressure of 1.6 MPa | Results under withstand pressure of 2.4 MPa |
|---|---|---|---|---|
| Slits on opposite sides | Sample No. 1 (No slit) | 0° | Not abnormal | Not abnormal |
| | Sample No. 2 (Slit depth: 90°) | 90 x 2 = 180° | Not abnormal | Nor abnormal |
| | Sample No. 3 (Slit depth: 120°) | 120 x 2 = 240° | Not abnormal | |
| | Sample No. 4 (Slit depth: 135°) | 135 x 2 = 270° | | |
| Slit on one side | Sample No. 5 (No slit) | 0° | Not abnormal | Not abnormal |
| | Sample No. 6 (Slit depth: 135°) | 135° | Not abnormal | Not abnormal |
| | Sample No. 7 (Slit depth: 165°) | 165° | Not abnormal | Not abnormal |

It is confirmed from the results shown in Table 5, irrespective of the case where a slit is disposed on one side or where the slits are disposed on the opposite sides, that the threshold value of the total slit depth under the withstand pressure of 1.6 MPa is up to 240° and that under the withstand pressure of 2.4 MPa that is 1.5 times the safety ratio is 180° or more.

Though four samples Nos. 1, 2, 6 and 7 having exhibited no abnormality in the pressure test were subjected to the depiping resistant test for confirming the strength of the housing, neither leakage nor detachment was induced. It was confirmed from Table 3 that sample No. 2 exhibited the largest dimension variation of the housing in the depiping resistant test, the increment of which was about 2 mm. When comparing the samples having no slit, the samples having a slit expose a conspicuous decrease in tensile strength in view of the structural strength of the housing. For this reason, the samples having a slit on one side rather than those having slits on the opposite sides is advantageous in terms of the tensile strength.

As regards the bending test for confirming the strength of the housing, in the case of the angle of bend of the pipe being 2°, no leakage from the coupled part was induced.

It can be confirmed from the tests results described above that practicable valves having a diameter-reducible joint part satisfies the fundamental performance values shown in Table 6 below. These values are the results that can be cleared in any of the items for evaluating valves.

**[Table 6]**

| Item | Performance value |
|---|---|
| Valve sealing pressure | 1.21 MPa, Not wet |
| Withstand pressure performance | 1.82 MPa, Not wet |
| Housing withstand pressure performance | 2.4 MPa, Not wet |
| Depiping-resistant performance | Load of 8800 N Inclusion pressure of 1.6 MPa Not wet |
| Bending performance | Angle of bend of 2° Inclusion pressure of 1.6 MPa Not wet |

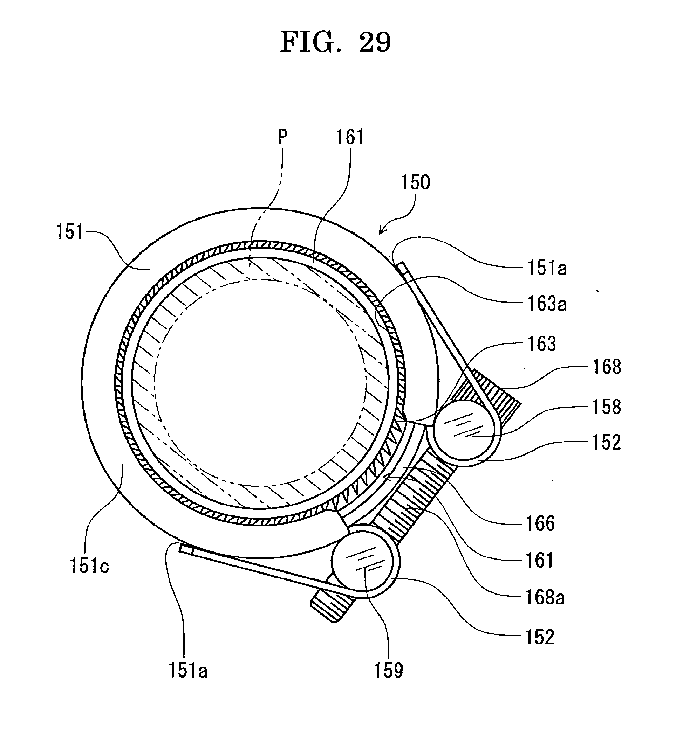

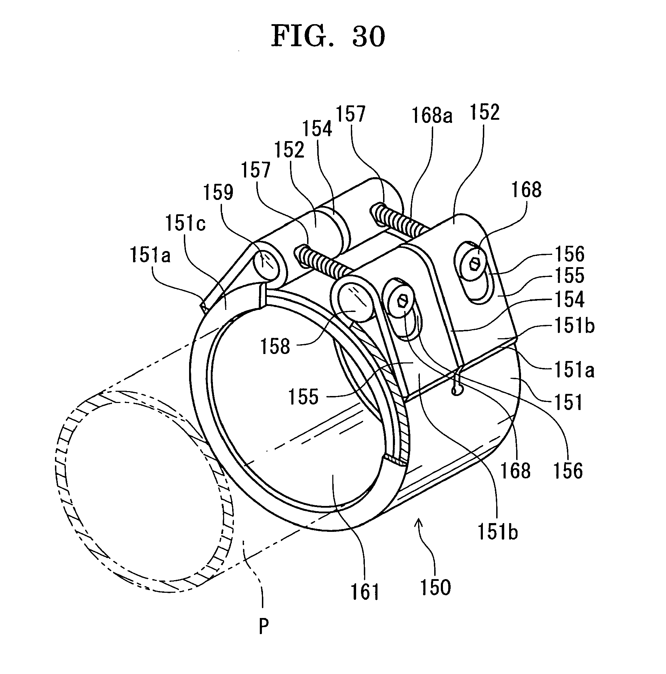

Next, a joint for diameter reduction having a diameter-reducible joint part in the invention relating to the principal part of the valve of Figure 11 having the diameter-reducible joint part will be described in detail. The valve of the present invention having the diameter-reducible joint part has the joint site that is the principal part thereof applicable to various joint sites other than that for a valve. As one example thereof, the application of the joint site to a joint will be described. In Figures 29 and 30, a joint main body 150 for diameter reduction comprises a cylindrical housing 151 which is C-shaped in cross section and which has opposite ends 152 and 152 from which pipes P and P are inserted, a seal sleeve 161 enclosed by the housing and a lock ring mechanism 160 attached by means of a bolt-fastening means to the inside of the housing 151, wherein the outer peripheral surfaces of the pipes P are fastened with the lock ring mechanism to join the pipes to the joint main body:

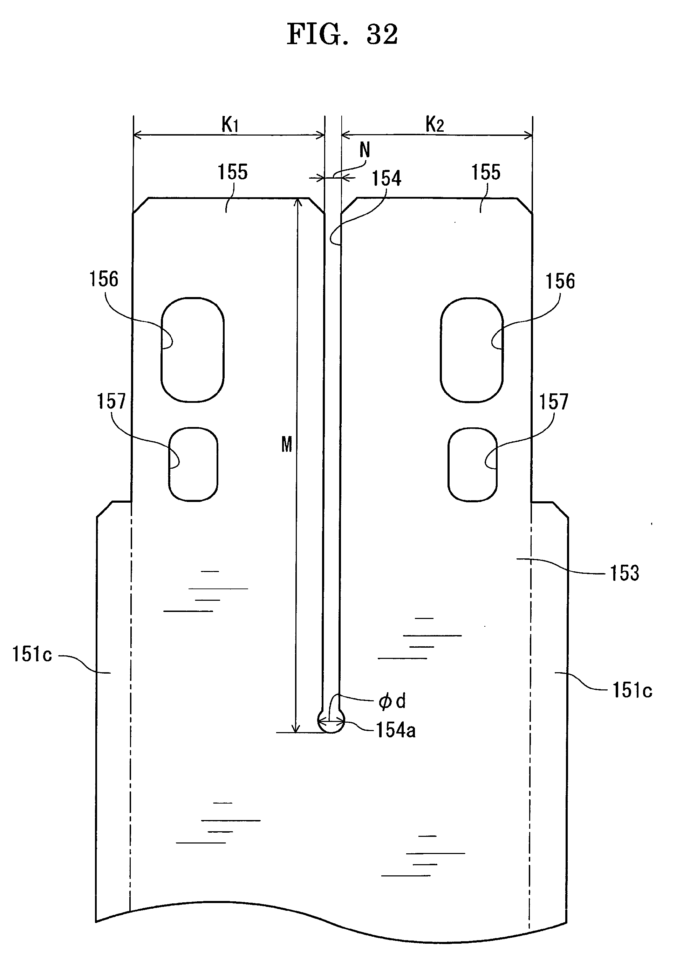

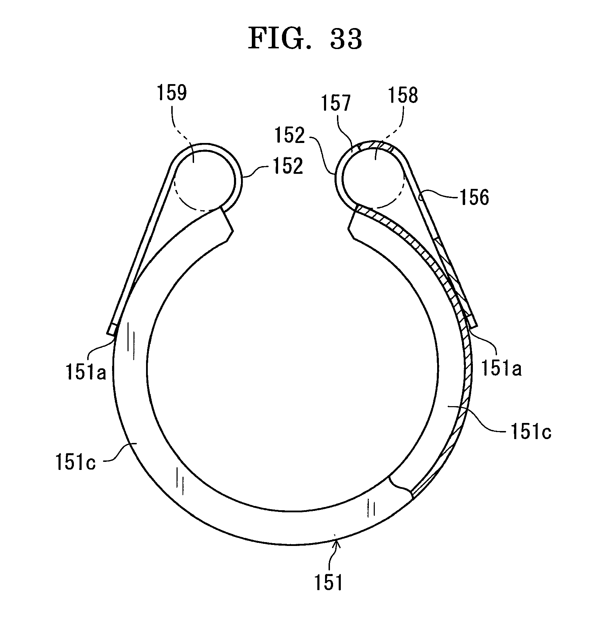

The housing 151 is formed by press molding from a sheet of metallic material, such as stainless steel, into a thin plate 153 as shown in Figure 32. The thin plate is subjected to a folding process to have a C-shape in cross section as shown in Figure 33. The thin plate 153 when being formed is formed therein with slits 154 that are cut from the opposite ends 152 and 152, respectively, along the circumferential direction of the housing 151 when being formed.

The slit 154 in the present embodiment is disposed at substantially the central position in the axial direction of the housing 151 so that the widths K₁ and K₂ of two divided segments 155 and 155 may have substantially the same length. However, the slit 154 may be disposed at a position such that the widths K₁ and K₂ have different lengths in accordance with the bore diameters and the materials of the pipes Pto be inserted.

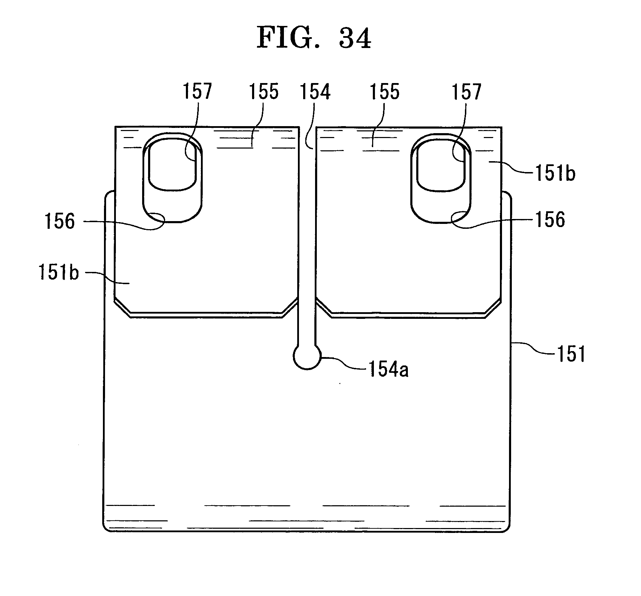

While the slit 154 may be formed to have an appropriate length from the end of the thin plate 153, it is at least necessary for the slit 154 to have a length *M* large enough to enable the divided segments 155 and 155 consequently formed to be folded back toward the outer periphery of the housing 151 as shown in Figures 33 and 34. In addition, the slit has an appropriate width N such that the divided segments 155 and 155 when being folded back are not allowed to interfere with each other. Furthermore, the slit 154 is provided at the distal end thereof with a diameter-enlarged arc slit 154a having a diameter of d so that the dimensional relation between the diameter dof the diameter-enlarged slit 154a and the width Nof the slit 154 may satisfy *d ≥ N.* The provision of the diameter-enlarged slit 154a enables the divided segments 155 at the distal end of the slit 154 to be prevented from splitting off by means of the stress generated by fastening with a bolt 168.

Each of the divided segments 155 and 155 has elongate holes 156 and 157 formed therein in the circumferential direction to have an appropriate interval such that the bolt 168 can be inserted and extracted between the elongate holes 156 and 157 after forming the housing 151 by bending process into the C-shape and folding the divided segments 155 backward.

When folding the divided segments 155 and 155, rod washers 158 and 158 are encircled by the folded sites of the divided segments 155 on the side for insertion of the bolts 168 and rod nuts 159 and 159 are encircled by the folded sites of the divided segments 155 on the opposed side, and the ends of the folded sites are fixed by means of spot welding to form welded parts 151a and 151a, as shown in Figure 33. As a result, the rod washers 158 and rod nuts 159 are fixed to form the opposite ends 152 and 152 of the housing 151 ready for fastening.

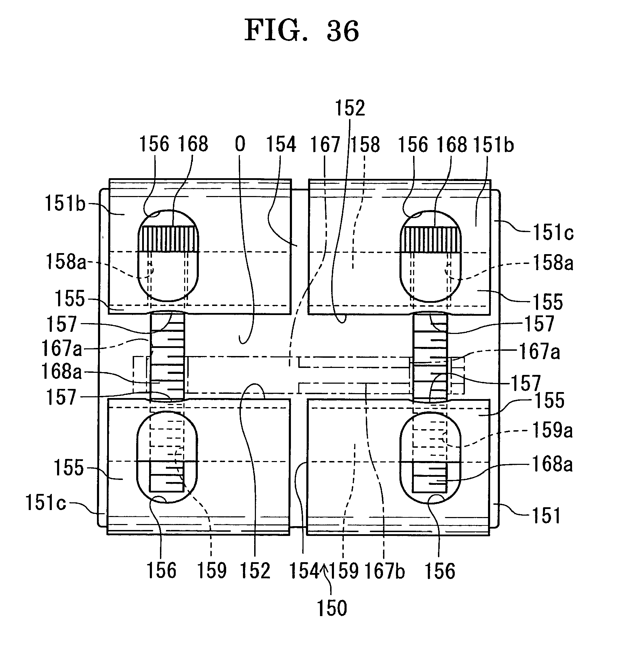

As shown in Figure 36, the rod washer 158 has a through hole 158a for admitting a male screw 168a of the bolt 168, and the rod nut 159 has a female nut 159a with which the male screw 168a can be engaged. The bolt 168 is inserted from elongate hole 156 on the side of the rod washer 158 into the through hole 158a of the rod washer 158, and the male screw 168a is screw-fitted in the female screw 159a of the rod nut 159. As a result, the ends 152 and 152 are fastened to enable the housing 151 to be reduced in diameter.

By attaching the rod washers 158 and rod nut 159 to the divided segments 155 and 155 individually, fastening with the bolt 168 enables sides 151b and 151b of the housing 151 on the insertion sides of the pipes P to be individually reduced in diameter. When the opposite ends 152 and 152 of the housing 151 are provided with slits 154 and 154, respectively, and the widths K1 and K2 of the divided segments 155 and 155 are set substantially equal, the length of the rod washers 158 and 158 can be made equal to the length of the rod nuts 159 and 159, thereby making it possible to use these in common with each other.

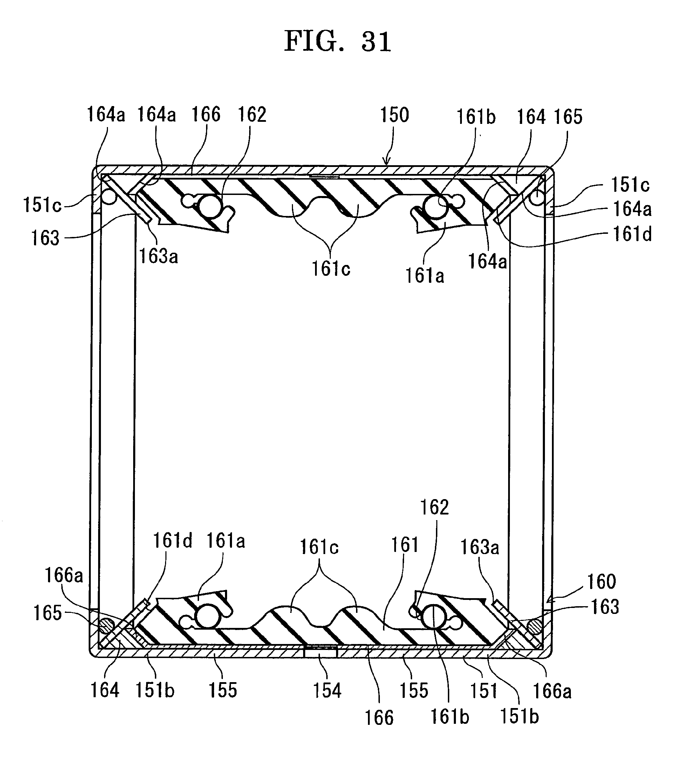

As shown in Figure 31, the sides 151b and 151b are provided on their end sides with projecting sites having an appropriate length, and the projecting sites are folded to the inner-diameter side to form flanges 151c and 151c. The flanges 151c and 151c accommodate and retain therein lock ring mechanisms 160 each having a seal sleeve 161, a spring 162, a lock ring 163, a triangular ring 164, a retaining ring 165 and a slide plate 166. The opposite ends 152 and 152 of the housing 151 are fastened with the bolts 168 in the presence of the lock ring mechanisms 160 to join the pipes P and Pto the housing.

As the seal sleeve 161, an annular rubber sleeve of an inner pressure sealing type is adopted. The seal sleeve 161 has lip parts 161a formed by bending the opposite ends thereof inward, and annular grooves 161b formed inside the folded sites of the lip parts 161a. The spring 162 formed in an annular shape is attached to the annular groove 161b. In addition, the inner peripheral surface of the seal sleeve 161 is bulged out in a wavy shape to form ribs 161c serving as reinforcements, thereby making the shape of the seal sleeve stable. As a result, the seal sleeve 161 is prevented from being twisted and, particularly, when a thermal stress is repeatedly applied to the sleeve main body to produce expansion force and compression force, the outer peripheral surface of the seal sleeve is prevented from being isolated from the inner periphery of the housing 151 or from the slide plate 166. In the present embodiment, while the rib 161c has a wavy shape, this shape is by no means limitative. Though not shown, the shape may be triangular in cross section, quadrangular in cross section or tooth-shaped. The seal sleeve 161 is attached to the inner peripheral surface of the housing 151, with the slide plate 166 intervening between them.

The lock ring 163 has its part slit, is formed in an annular shape and has the inside leading ends thereof provided with a plurality of claws 163a. The lock ring 163, when the housing 151 has been reduced in diameter, is reduced in diameter to cause the claws 163a to bite into the outer peripheral surface of the pipe P to be joined, thereby enabling the pipe P to be prevented from its extraction. Also, at the same time, the seal sleeve 161 is pressed on the outer peripheral surface of the pipe P to form a sealed structure relative to the pipe P.

The triangular ring 164 has its part slit and is formed in an annular shape reducible in diameter. The inside thereof assumes a triangular shape in cross section having apex sites and have conical surfaces 164a and 164a serving to engage with and support thereon the seal sleeve 161 and the lock ring 163.

The retaining ring 165 is formed in an annular shape having a slit site, similarly to the triangular ring 164, and is reducible in diameter. The retaining ring 165 has a circular shape in cross section and has the outer peripheral surface thereof disposed between the flange 151c and the lock ring 163 as abutting on these, thereby retaining the lock ring 163.

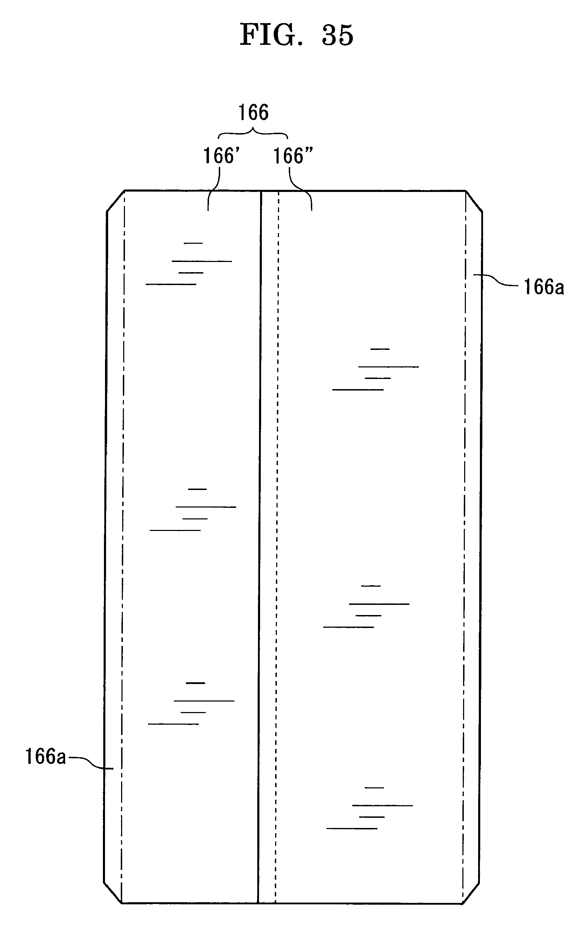

The slide plate 166 is formed substantially in an arc shape through bending of a thin plate member. In the present embodiment as shown in Figures 31 and 35, the slide plate 166 is divided along the circumferential direction of the housing 151 into at least two slide plates 166' and 166" that are partially overlapped and bent in the arc shape to be accommodated in the inner circumference of the housing 151. Since the slide plate 166 is thus divided, it is made possible to individually fasten the divided segments 152 and 152 of the housing 151 and individually reduce them in diameter.

The slide plate 166 is provided at the edge site on the side of insertion of the pipe P with a bent part 166a tapered aslant so as to overlap the conical surface 164a of the triangular ring 164. The slide plate 166 is disposed between the seal sleeve 161 and the housing 151 to cover the pipe P while sliding along the inner periphery of the housing 151, thereby covering the space between the ends 152 and 152, which is the gap of the housing 151.

The slide plate 166 may be formed from a sheet of thin plate not shown and particularly formed, in cross section, into a substantial mountain shape having its apex disposed inside thereof to form a rib along the circumferential direction. As a result, the rib will prevent the slide plate from being twisted even when being fastened and enable the slide plate to be reduced in diameter while the fastening force is uniformly exerted thereon. The rib has desirably a height as small as possible in order to maintain homogeneous diameter reduction of the seal sleeve 161.

It will next be described how the pipe P is joined to the joint main body 150 of the above embodiment. First, a marking not shown is given in advance to a junction part of the outer periphery of the pipe Pto be joined to the joint main body 150. Though this marking may be omitted, in order to accomplish the junction of the pipes P, with the pipes abutted correctly at the central position of the joint main body 150, the marking is preferably given to enable visual discernment, thereby bringing the pipes Pto a properly inserted state. The marking can easily be given with a felt pen etc. The pipes *P* may be any combination of pipes of metal, such as steel, and pipes of nonmetal, such as resin, and are inserted from opposite sides 151b and 151b of the joint main body 150 and maintained with the pipe ends thereof abutted on each other near the center of the joint main body.

Subsequently, the bolt 168 is fastened relative to the rod washer 158 and rod nut 159 to reduce the housing 151 in diameter so as to cause the ends 152 and 152 at the folded-back sites of the housing 151 to become gradually close to each other. When the housing 151 has been reduced in diameter, a pressing force is applied in the diameter-reducing direction to the seal sleeve 161 sandwiched between the inner periphery of the housing and the outer periphery of the pipe Pto reduce the seal sleeve 161 in diameter. The seal sleeve 161, with its diameter reduction, is elongated in the lengthwise direction by a force exerted thereon in its collapsing direction, and an elongating force is also exerted near the opposite ends thereof.

Since the slide plate 161 is disposed between the seal sleeve 161 and the housing 151 and attached thereto in a state in which the two divided slide plates 166' and 166" are partially overlapped, the two slide plates are slidable, respectively in the axial direction. Since the seal sleeve 161 has the outer periphery thereof in contact with the slide plate 161, when the seal sleeve is added with a force, the slide plates 161' and 161" are slid by frictional force in the direction in which the seal sleeve 161 slides. As a result, the seal sleeve 161 is elongated in the axial direction while collapsing entirely. With this operation, the seal sleeve is brought into intimate contact with the pipes P while homogenously exerting a high pressing force onto the pipes, thereby enhancing the sealability.

When joining pipes P of the same outside diameter, plumbing (fastening with the bolt 168) is performed from the pipe insertion side on which the inside slide plate 166' of the overlapped slide plates 166' and 166" is positioned (on the left side in Figure 35). When joining pipes of different diameters, the pipe of the smaller diameter is disposed on the pipe insertion side on which the inside slide plate 166' is positioned and inserted, and fastening is then performed with the bolts 168. The order of fastening and pipe diameter (size) can be marked by means of press working with a service marking. This service marking, such as numbers indicating the order of fastening, letters indicating the sizes of the pipes, etc. can optionally be set.

After completion of fastening, since a lip part 161a of the seal sleeve 161 is pressed on the pipes owing to the diameter-reducible force of the housing 151, the self-bondage force of the fluid pressure and the centripetal force of the spring 162, with appropriate sealability and flexibility (flexibility angle of ±2° on one side and 4° on both sides) relative to the outer peripheral surfaces on the opposed sides of the pipes P maintained, an extremely excellent sealed structure can be formed.

Furthermore, since the seal sleeve 161 of an inner pressure seal type is adopted, a sealed structure utilizing the pressure of the fluid flowing within the pipes P is formed. As a result, even when the force of the fluid is exerted in the direction of leaking the fluid from the abutting sites of the pipes P to increase the diameter of the seal sleeve 161, the self-bondage force acts to further enhance the sealability.

On the other hand, when the seal sleeve 161 has been elongated in the direction of pipe insertion, in Figure 31, the conical surface 164a on one side of the triangular ring 164 on which a tapered part 161d of the seal sleeve is pushed, the triangular ring 164 is urged to slide in the pushed direction. On the side of the other conical surface 164a of the triangular ring 164, since the retaining ring 165 is disposed between the lock ring 163 and the flange 151c and made of a metal, it is not reduced in diameter even by being pushed by the triangular ring 164 and, as a result, the lock ring 163 is urged to rotate around the retaining ring 165. The lock ring 163 therefore rises itself up gradually to enable the claw 163a to bite in the peripheral junction surface of the pipe *P*. At this time, the claw can bite in it more deeply than in the case where the triangular ring 164 is not slid.

As a consequence, the joint main body 150 induces no water leakage from the pipe P and has no possibility of the pipe P being depiped, thereby materializing an excellent sealed junction state. Even when an extracting force is applied to the pipe P, for example, the pipe Pis difficult to extract. Thus, the pipe wears for a long period of time while maintaining extremely high junction strength.

Since the housing 151 of the joint is provided therein with slits 154 having a suitable length at least from the edges 152 and 152 along the circumferential direction to form the divided segments 155 and 155, it is unnecessary for the bolts 168 and 168 on the opposite sides to be alternately fastened bit by bit in order to homogenously reduce the housing 151 in diameter. Only by fastening both the bolts 168 and 168 in a suitable order, the pipes P inserted into the sides 151b and 151b are reduced in diameter to a greater extent by means of the slits 154 to be firmly joined while being sealed by dint of the strong sealing surface pressure.

Even when the pipes P and P have different diameters or are made of different materials, the fastening force by the bolt 168 is exerted to the individual pipes Pto enable the pipes to be effectively joined. In addition, since one of the bolts 168 and 168 can only be fastened, junction of the pipes P can be attained from one to the other. Furthermore, by making the diameters of the sides 151b and 151b different, pipes having different nominal diameters can be joined. Moreover, the pipes having different diameters can be joined without use of an exclusive sleeve, using the seal sleeve 161 having the opposite ends of the same shape and exerting a gripping force by the lock ring 163.

As shown in Figure 36, to the bolt-fastening member 168 disposed between the opposite ends 152 and 152 enlarging and reducing the diameter of the housing 151 of the joint main body 150, an indicator 167 for confirming the state of the housing 151 reduced in diameter may be attached. The indicator 167 has a width corresponding to a space *O* between the opposite ends 152 and 152 when the housing 151 has been reduced in diameter. The indicator 167 is provided with communication holes 167a and 167a and attached between the opposite ends 152 and 152, with the bolts 168 inserted into the communication holes 167a and 167a.

When the bolt-fastening member 168 has been fastened, the indicator 167 is sandwiched between the ends 152 and 152. By visually discerning the state of the indicator 167 and the ends 152 being abutted on each other, it is made possible to avoid failure to fasten the bolts 168 and 168. The indicator 167 can also regulate the amount of fastening by the bolts 168 to maintain constant at all times the widths of the ends 152 and 152 after being fastened. Thus, fastening is attained with a prescribed amount of fastening. By providing the indicator 167, therefore, fastening can easily be completed while visually discerning the state of junction. Thus, the junction operation can rapidly be carried out and the junction can be attained while securing a prescribed fastening force at the time of junction.

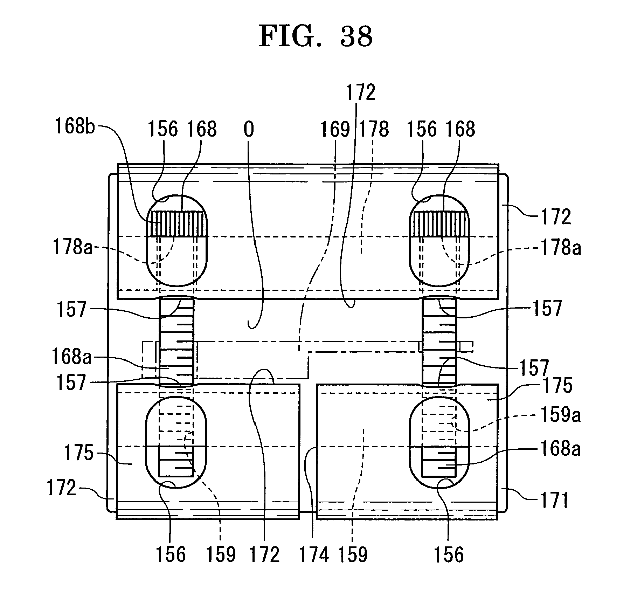

Furthermore, when connecting pipes standardized and having different sizes, the opposite ends 152 and 152 of the housing are formed to be deformable to suit the spaces *O* corresponding to the pipes of the different diameters and, as shown by an alternate long and short dash line in the drawing, the indicator 167 is provided with a stepped part 167a different in thickness. As a result, it is possible to acquire suitable fastening forces corresponding to the different spaces *O* formed on the opposite sides when the ends 152 and 152 have been fastened. Thus, by forming the indicator 167 into a shape corresponding to the space *O*, even the pipes P of different diameters can be fastened with the fastening forces replying to the different diameters. Therefore, the sealability and extraction prevention property on the opposite sides can be secured. In addition, when applying the indicator 167 to a joint main body having a slit on one side, since the end 152 on the side of the slit is reduced in diameter when being fastened, an indicator 169 is preferably formed in a staircase pattern as shown in Figure 38.

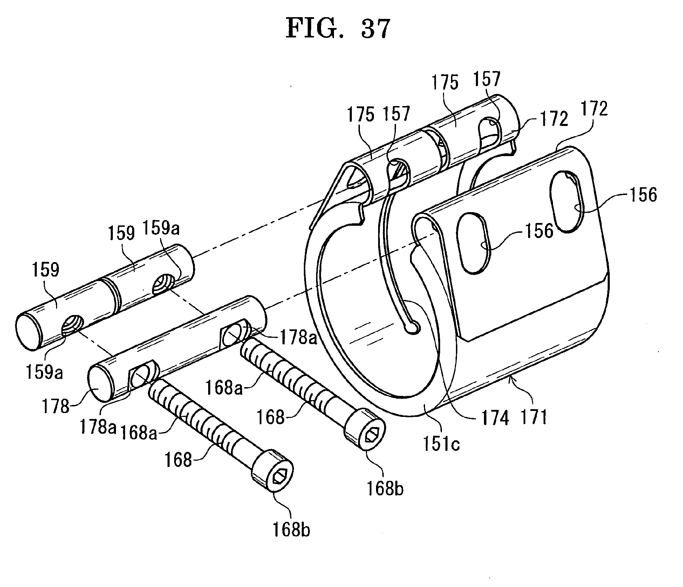

Figures 37 and 38 illustrate the second embodiment of the diameter-reducible joint. Incidentally, the same places as in the above embodiment are given the same reference numerals, and the description thereof will be omitted. A housing 171 in the figures is provided with a slit 174 along the circumferential direction from one of ends 172. Thus, the slit may be provided on one side of the housing or, as described above, on the opposite sides.

The slit 174 is to be formed on the side of the attachment of a rod washer 178 and, when the housing 171 has the same size as the housing 154 shown in Figure 31, the unshown length of the slit 174 is made larger than the length Mof the slit 154 shown in Figure 32. As a result and after constituting the joint main body by the housing 171, the housing can greatly be reduced in diameter, and pipes P and P having greatly different diameters can be joined to the opposite ends 172 and 172, respectively. The length of the slit 174 is desirably twice or less the length *M* of the slit 154.

The rod washer 178 is provided with a flat seat 178a to which a head 168b of the bolt 168 is to be fixed. The abutment of the head 168b on the seat 178a enables the bolt 168 to be prevented from rotating relative to the rod washer 178 and from being loosened after being fastened, thereby maintaining a firmly joined state. Though the formation of the seat 178a reduces the diameter of the rod washer 178 by the amount of the formation to possibly weaken the rigidity of the entire rod washer, by forming the rod washer 178 in an integral straight fashion, the rigidity thereof can be heightened even in the case of the housing having the slit on one side. Therefore, the bolt is effective in a place requiring high rigidity and enables the junction while manifesting a strong bending stress. On the other hand, when the rod nut 159 is provided for a divided structure, divided segments 175 and 175 of the housing 171 can individually be fastened.

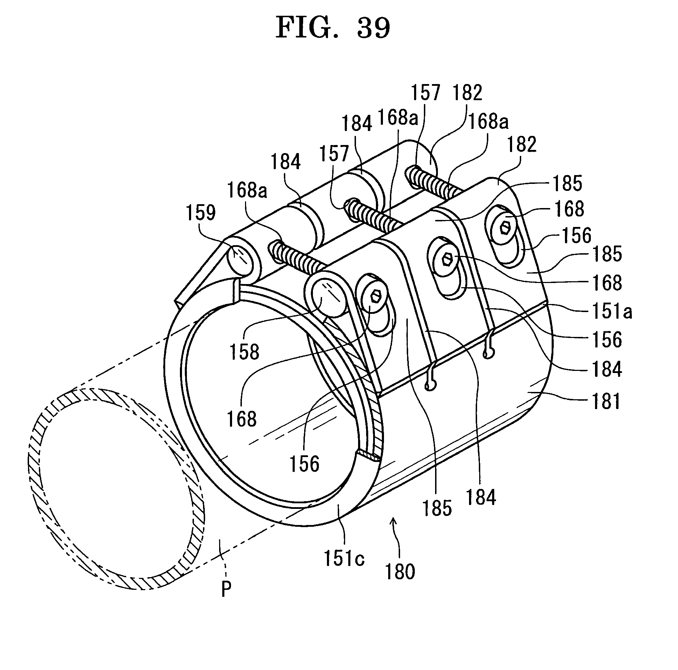

Figure 39 shows the third embodiment of the joint for diameter reduction. In a joint main body 180, a housing 181 is formed in the shape of a long cylinder, and two slits 184 and 184 are formed in each of the opposite ends 182 and 182 in the inner circumferential direction of the housing 181. With this, three divided segments 185 are formed to fasten the pipes *P* and *P* to join the pipes. The joint main body 180 may have unshown long allowances for the pipes *P* and, by fastening the allowances at plural places, the sealability and the pipe extraction property can be enhanced. Furthermore, each of the pipes P is fastened at two places, thereby preventing the pipes *P* from fluctuating in the axial direction to maintain the stable attachment state.

Furthermore, the presence of the insertion allowance enables the degree of insertion of the pipe *P* to be adjusted and the pipe *P* to be joined at a field site while absorbing the pipe dimension error. It is also possible to absorb the fluctuation in thermal elongation and shrinkage of the pipe P due to a change in ambient temperature. In the present embodiment, while there are two slits 184, the number is optional. Three or more slits may be formed in accordance with the length of the joint main body.

In addition, though not shown, the housing 181 may be provided at substantially central portion thereof with a cylindrical branch part communicating the inside thereof. In this case, it can be utilized as a branch joint. Furthermore, the branch part can be formed into a socket shape, and another branch pipe can easily be joined to the branch part.

The joint or joint for diameter reduction having no slit in the present embodiment is joined to a pipe and, to this plumbing line, the valve having the diameter-reducible joint is detachably joined. The resultant can be joined to an appropriate plumbing line to provide a system extremely highly valuable in use.

As described in the foregoing, the principal portion of the valve having the diameter-reducible joint according to the present invention has its connection structure utilized also for a joint. Furthermore, besides the valve and the joint, the housing is given a structure capable of being connected as being reduced in diameter. As a result, as regards various kinds of plumbing instruments and other such instruments, the principal portion can be utilized to have a connectable structure.

### Industrial Applicability:

According to the present invention, a plumbing instrument attached to a pipe for a valve, a strainer, a check valve, a pressure gauge, a flowmeter, etc. can be disposed in the diameter-reducible housing and, as a matter course, this diameter-reducible technical idea can widely be applied to the plumbing technique.

## Claims

1. A valve having a diameter-reducible joint part, comprising a diameter-reducible housing having a flow path therein and accommodating a seal sleeve formed of rubber, a valve mechanism provided with a valve element and built in the housing to enable switching of the flow path and controlling of a flow rate, and a junction pipe having a junction end joined with the seal sleeve to the diameter-contracted joint in a tightly sealed fashion through diameter reduction of the housing.

2. A valve having a diameter-reducible joint part according to claim 1, wherein the housing is equipped on a peripheral surface thereof with a shaft hole, the valve mechanism is equipped with a shaft-mounting cylinder that is provided in the shaft hole, and the seal sleeve is equipped with a shaft-mounting ring that is inserted into the shaft-mounting cylinder.

3. A valve having a diameter-reducible joint part according to claim 1 or 2, wherein the valve element of the valve mechanism is disc-shaped for use in a butterfly valve and disposed in a rigid cylindrical frame body made of a metal to be rotatable through an operation of a stem.

4. A valve having a diameter-reducible joint part according to claim 3, wherein the valve element for the butterfly valve is coated with a seal member or has a seal member provided on at least a circular peripheral surface thereof.

5. A valve having a diameter-reducible joint part according to claim 3 or 4, further comprising a rigid retaining cylinder disposed between the stem and the shaft-mounting ring via an O-ring.

6. A valve having a diameter-reducible joint part according to any one of claims 3 to 5, wherein the seal sleeve has formed on a central inner peripheral surface thereof with an annular valve seat part as projected therefrom, and the disc-shaped valve element is rotatably disposed on the annular valve seat.

7. A valve having a diameter-reducible joint part according to claim 6, wherein the annular valve seat part has an inserting member buried in a position of a boss part thereof.

8. A valve having a diameter-reducible joint part according to claim 1 or 2, wherein the seal sleeve is provided on an inner peripheral surface thereof with a rigid cylindrical holder of a metal, and the valve mechanism has a ball which has a through hole and which is disposed on an inner peripheral surface of the cylindrical holder via a ball seat so as to be rotatable through an operation of a stem.

9. A valve having a diameter-reducible joint part according to claim 8, wherein the stem has a lower end joined to the ball, and the rigid retaining cylinder of the metal is disposed between the stem and the shaft-mounting ring via an O-ring.

10. A valve having a diameter-reducible joint part according to any one of claims 1 to 9, further comprising a gland screwed in a shaft-mounting cylinder, a stem has an upper end projecting from the gland, a handle fixed to the upper end of the stem, and an intermediate valve travel-fixing mechanism attached to a site of fixation.

11. A valve having a diameter-reducible joint part according to any one of claims 1 to 10, wherein the housing is cylindrical and has a gap formed by press working, and the seal sleeve of rubber accommodated in the housing is formed with lip parts by bending opposite ends thereof inward, and further comprising a lock ring that bites in a outer peripheral junction surface of the pipe when the housing is reduced in diameter in consequence of the pipe being joined to the housing.

12. A valve having a diameter-reducible joint part according to claim 11, wherein the lip parts of the seal sleeve is pressed on the pipe owing to a diameter-reducible force of the housing, a self-bondage force of fluid pressure and a centripetal force of a spring, with the sealability and appropriate flexibility relative to outer peripheral surfaces on opposed sides of the pipes maintained.

13. A valve having a diameter-reducible joint part according to claim 11 or 12, wherein the housing is made of stainless steel and has opposite ends thereof provided with flange parts formed by press working, and each of the flange parts has accommodated and retained at an inner peripheral position thereof the lock ring, a triangular ring having a cut and a retaining ring having a cut.

14. A valve having a diameter-reducible joint part according to any one of claims 11 to 13, wherein the housing is provided on opposite ends thereof with bolt-nut mechanisms with which the housing is reduced in diameter and fixed in a diameter-reduced state.

15. A valve having a diameter-reducible joint part that has diameter-enlarging and -contracting functions, comprising a housing that has one or both sides enlarged or reduced in diameter to join a pipe or pipes thereto, a valve mechanism fixed in the housing via a fixed part having a fixing function, and a dividing mechanism via which the fixing function and the diameter-enlarging and -contracting functions are made independent.

16. A valve having a diameter-reducible joint part according to claim 15, wherein the dividing mechanism is a slit of a prescribed length formed along a circumferential direction of the housing in a vicinity of the fixed part of the valve mechanism.

17. A valve having a diameter-reducible joint part according to claim 16, wherein the slit is formed along the circumferential direction on one or both sides of opposite ends of the housing.

18. A valve having a diameter-reducible joint part according to any one of claims 15 to 17, further comprising a bolt-fastening mechanism with which the opposite ends of the circumferential direction of the housing are fastened via the slit formed in the vicinity of the fixed part, wherein the fixed part fixes the valve mechanism in a fastened state.

19. A valve having a diameter-reducible joint part according to claim 15, wherein the valve mechanism comprises a valve element accommodated in an annular frame body that is provided within the housing, a valve shaft disposed on the frame body for rotating the valve element as being projected from a shaft cylinder to an outside of the housing and wherein the shaft cylinder is screwed with a gland from the outside of the housing to suspend and fix the frame body.

20. A valve having a diameter-reducible joint part according to claim 19, wherein the shaft cylinder has a female or male screw, the gland has a male or female screw, and the shaft cylinder is screwed with the gland through fitting between the female screw and the male screw.

21. A valve having a diameter-reducible joint part according to claim 15, further comprising a bolt-fastening mechanism for enlarging or reducing the housing in diameter through an opening between opposite ends of the housing, a seal sleeve formed on an inner periphery of the housing and a lock mechanism provided on the inner periphery on the opposite sides of the housing.

22. A valve having a diameter-reducible joint part according to claim 21, wherein the seal sleeve has a flat inner surface.

23. A valve having a diameter-reducible joint part according to claim 21 or 22, further comprising a divided slide plate provided on an outer peripheral surface of the seal sleeve in a vicinity of the opening of the housing in an circumferential direction thereof.

24. A valve having a diameter-reducible joint part according to any one of claims 15 to 23, further comprising an indicator disposed at the opening between the opposite ends of the housing shaped to enable visual discernment of the fixing function and the diameter-enlarging and -reducing functions.

25. A valve having a diameter-reducible joint part according to any one of claims 19 to 23, wherein the valve shaft is provided with a handle for switching or controlling the valve mechanism.

26. A joint for diameter reduction, comprising a cylindrical housing having a C-shaped cross section, a seal sleeve surrounded by the housing, a bolt-fastening member for fastening opposite ends of the housing, and a lock ring for joining a pipe to the housing when the opposite ends of the housing have been fastened with the bolt-fastening member, wherein the housing is provided with a slit formed in an appropriate length from one or both of the opposite ends of the housing along a circumferential direction of the housing.

27. A joint for diameter reduction according to claim 26, wherein the slit comprises a single slit on the opposite ends of the housing in the circumferential direction thereof.

28. A joint for diameter reduction according to claim 26, wherein the cylinder is formed into a long cylindrical shape, and the slit comprises a plurality of slits on the opposite ends of the housing in the circumferential direction thereof.

29. A joint for diameter reduction according to claim 26, further comprising a thin slide plate formed on an inner peripheral surface of the housing so as to cover the pipe and divided in an inner circumferential direction of the housing into at least two.

30. A joint for diameter reduction according to any one of claims 26 to 29, further comprising an indicator disposed between the opposite ends of the housing through which the housing is enlarged or reduced in diameter for visually discerning a diameter-enlarged or -reduced state and formed into a shape corresponding to a space between the opposite ends assumed when the housing has been reduced in diameter.

31. A plumbing system comprising at least the joint for diameter reduction having the slit according to claim 26 or a joint for diameter reduction having no slit with which joint pipes are joined together, to constitute a plumbing, and the valve having a diameter-reducible joint part according to claim 1 or 15 and detachably attached to the plumbing.
